# EUROPEAN PATENT APPLICATION

(11) **EP 4 757 376 A1**
(43) Date of publication of application: **10.06.2026**
(21) Application number: 24849255.5
(22) Date of filing: 01.08.2024
(51) Int. Cl.: H04W 12/106, H01M 10/48, H04W 4/00, H04W 4/48, H04W 12/0471, H04W 28/082, H04W 84/10, H04W 88/06, G01R 31/371, H04B 1/403, H04L 9/40, H04L 69/14, H04W 4/38, H04L 1/00, H04W 28/04, H04W 12/03

(54) **WIRELESS COMMUNICATION DEVICE AND MONITORING SYSTEM**

(30) Priority: 02.08.2023 US 202363517250 P
(71) Applicant: Nuvoton Technology Corporation Japan, Nagaokakyo City, Kyoto 617-8520 (JP)
(72) Inventor: KITAGISHI, Yoichi, Nagaokakyo City, Kyoto 617-8520 (JP); ITO, Tetsuo, Nagaokakyo City, Kyoto 617-8520 (JP); YOSHII, Taku, Nagaokakyo City, Kyoto 617-8520 (JP); FUJIMOTO, Atsushi, Nagaokakyo City, Kyoto 617-8520 (JP); OSAKI, Fumihiro, Nagaokakyo City, Kyoto 617-8520 (JP); KOBAYASHI, Hitoshi, Nagaokakyo City, Kyoto 617-8520 (JP); HATANI, Naohisa, Nagaokakyo City, Kyoto 617-8520 (JP); TAMURA, Hikaru, Nagaokakyo City, Kyoto 617-8520 (JP); BABA, Ryoichi, Nagaokakyo City, Kyoto 617-8520 (JP); OTSUKA, Takashi, Nagaokakyo City, Kyoto 617-8520 (JP); ISHIMINE, Masato, Nagaokakyo City, Kyoto 617-8520 (JP); OYAMA, Yasuhiro, Nagaokakyo City, Kyoto 617-8520 (JP)
(74) Representative: Appelt, Christian W.
(86) International application number: PCT/JP2024/027543
(87) International publication number: WO 2025/028610

(57) **Abstract**

A wireless communication device (100) includes: a first wireless communication subsystem (111) including a first wireless communication circuit; a second wireless communication subsystem (112) including a second wireless communication circuit; and a control system (113) that controls the first wireless communication subsystem (111) and the second wireless communication subsystem (112). The first wireless communication subsystem (111) communicates using a first frequency, the second wireless communication subsystem (112) communicates using a second frequency, and the control system (113) controls the first frequency and the second frequency.

## Description

### [Technical Field]

The present disclosure relates to a wireless communication device and a monitoring system.

### [Background Art]

Conventionally, various measures against the risks of external attacks have been considered for wireless communication devices or wireless communication systems. For instance, as a measure against the risks of external attacks, public-key encryption using, for example, the Advanced Encryption Standard (AES) is under consideration. For instance, Patent Literature (PTL) 1 discloses an access point with a wireless communicator that uses an encryption scheme such as the AES.

### [Citation List]

### [Patent Literature]

[PTL 1] Japanese Unexamined Patent Application Publication No. 2018-023151

### [Summary of Invention]

### [Technical Problem]

Incidentally, enhancing the communication quality of wireless communication devices is called for.

In view of this, the present disclosure provides a wireless communication device and a monitoring system that are capable of enhancing communication quality.

### [Solution to Problem]

A wireless communication device according to one aspect of the present disclosure includes: a first wireless communication subsystem including a first wireless communication circuit; a second wireless communication subsystem including a second wireless communication circuit; and a control system that controls the first wireless communication subsystem and the second wireless communication subsystem, in which the first wireless communication subsystem, the second wireless communication subsystem, and the control system are configured as a single semiconductor device.

A monitoring system according to another aspect of the present disclosure includes: a monitoring circuit that monitors a target object; and the above wireless communication device that wirelessly communicates data obtained by the monitoring circuit.

### [Advantageous Effects of Invention]

A wireless communication device according to one aspect of the present disclosure and so forth are capable of enhancing communication quality.

### [Brief Description of Drawings]

[FIG. 1]

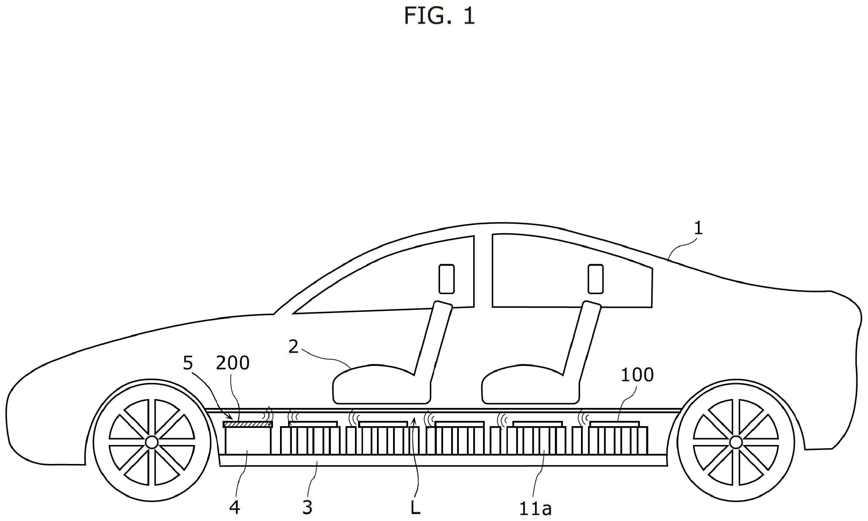

   FIG. 1 is a schematic diagram illustrating a vehicle provided with a monitoring system according to Embodiment 1.
[FIG. 2]

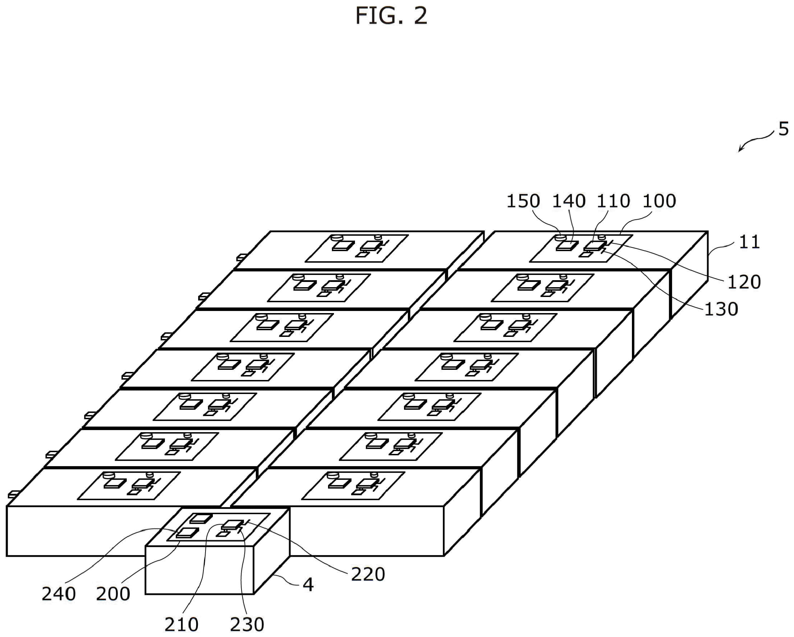

   FIG. 2 is an exterior drawing illustrating an example of the monitoring system according to Embodiment 1.
[FIG. 3A]

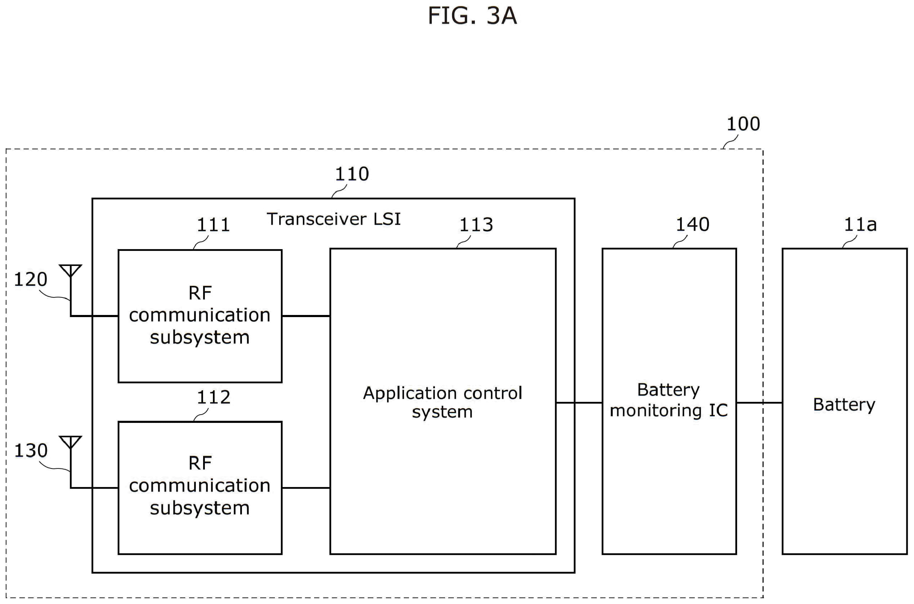

   FIG. 3A illustrates an overview configuration of a monitoring circuit according to Embodiment 1.
[FIG. 3B]

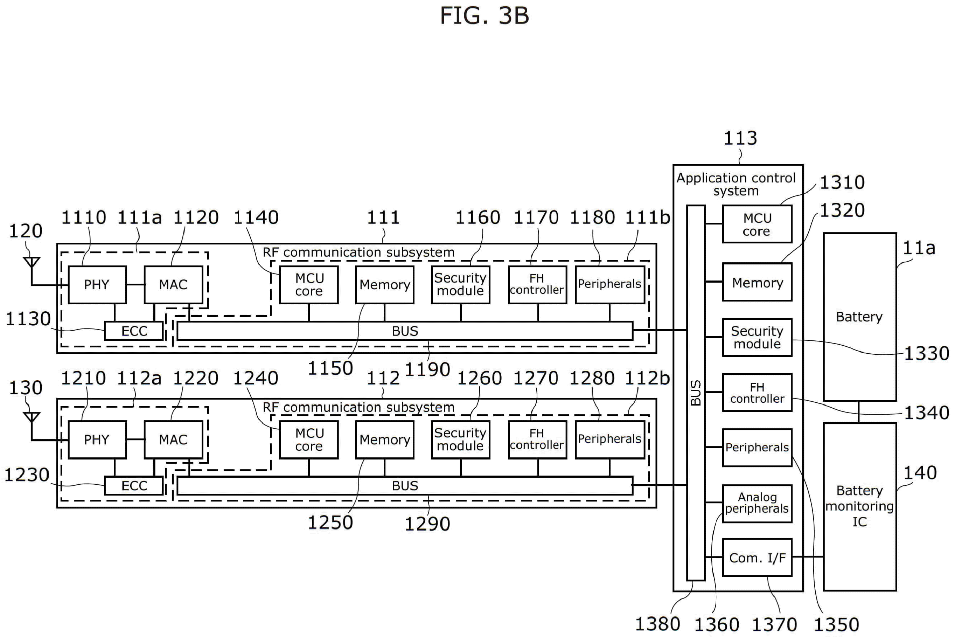

   FIG. 3B illustrates a detailed configuration of the monitoring circuit according to Embodiment 1.
[FIG. 4]

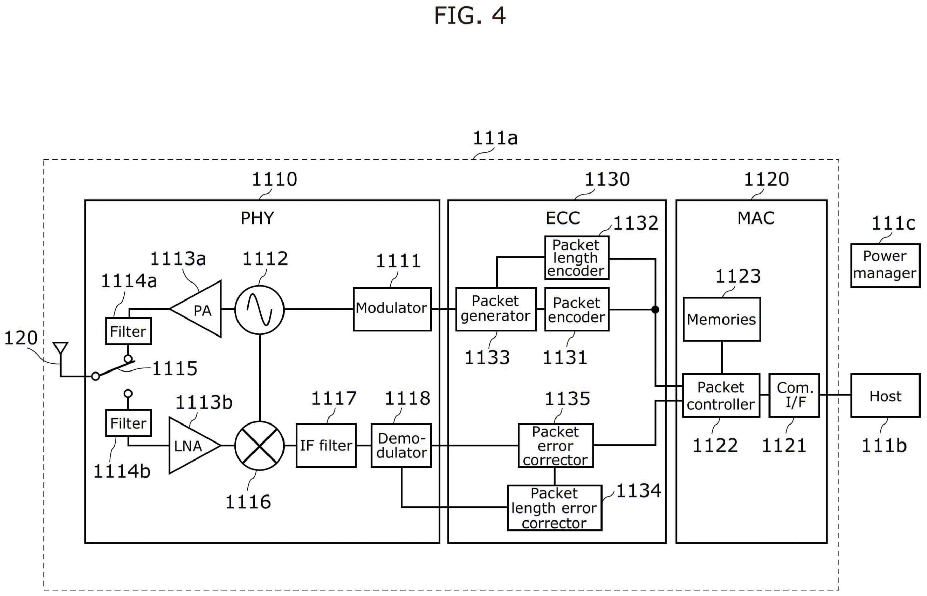

   FIG. 4 illustrates a configuration of a first wireless communication circuit according to Embodiment 1.
[FIG. 5]

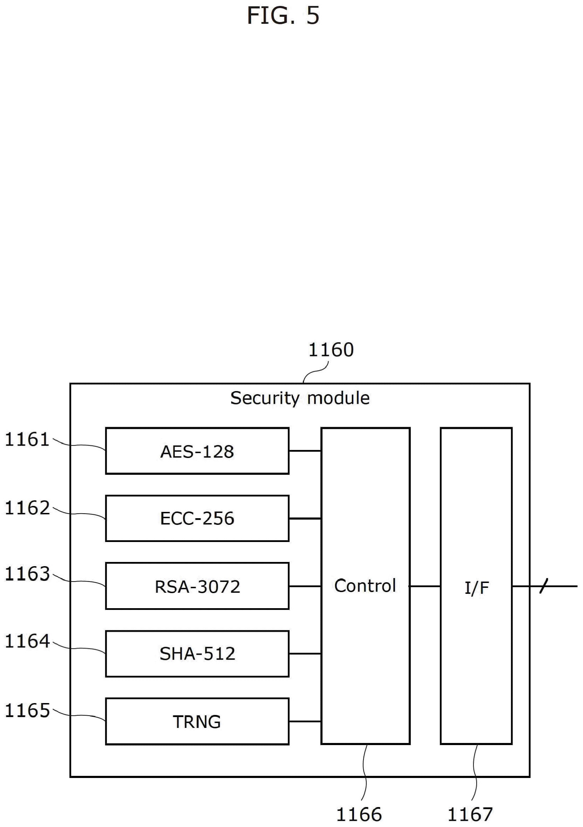

   FIG. 5 illustrates a configuration of a security module according to Embodiment 1.
[FIG. 6A]

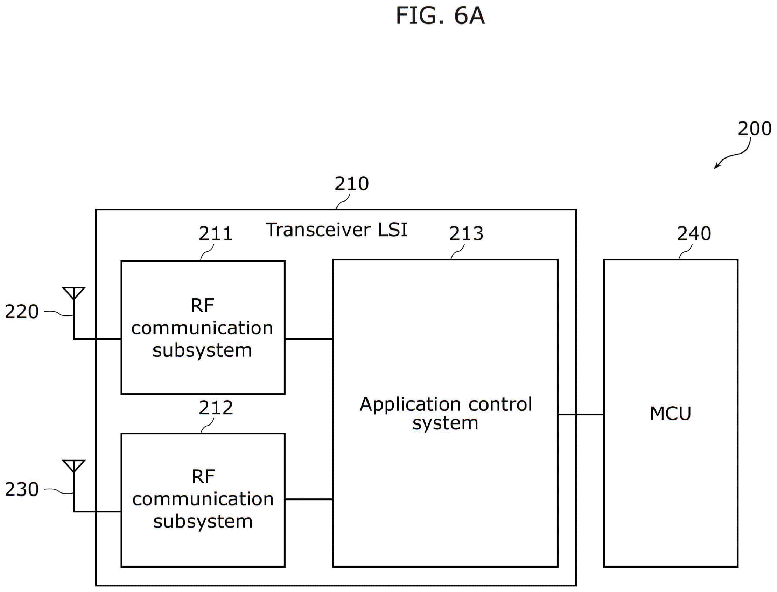

   FIG. 6A illustrates an overview configuration of a management circuit according to Embodiment 1.
[FIG. 6B]

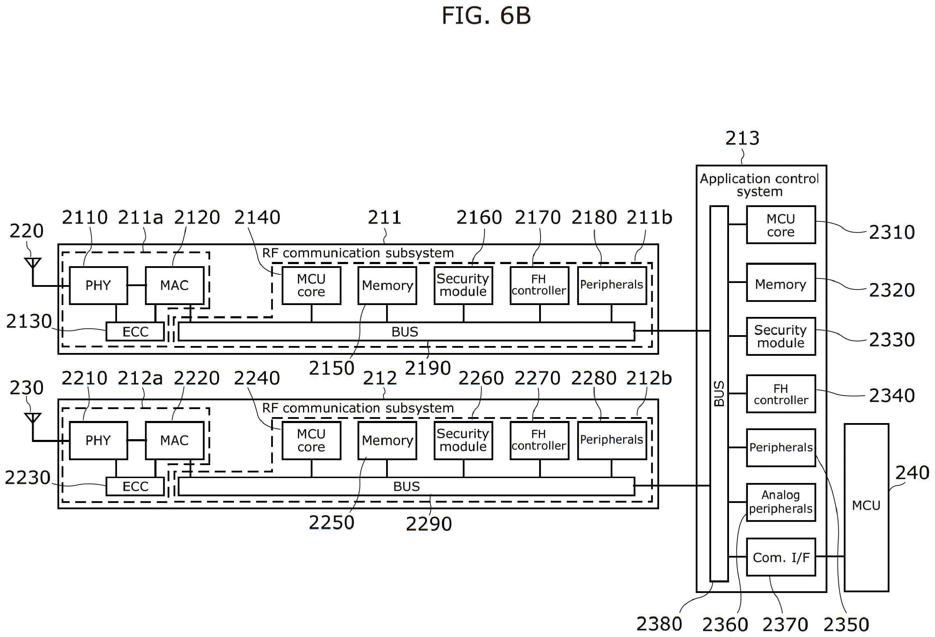

   FIG. 6B illustrates a detailed configuration of the management circuit according to Embodiment 1.
[FIG. 7]

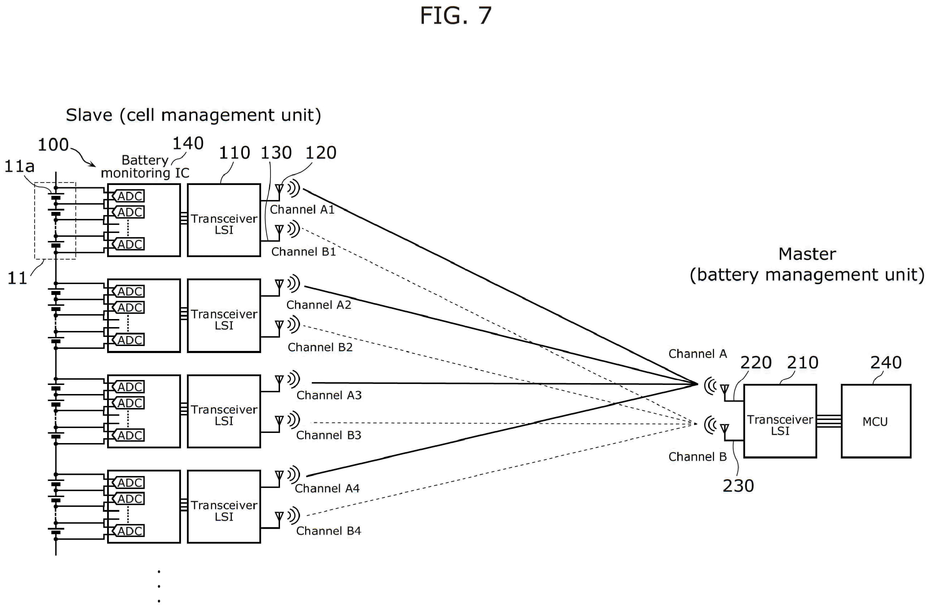

   FIG. 7 is a figure for explaining communication in the monitoring system according to Embodiment 1.
[FIG. 8]

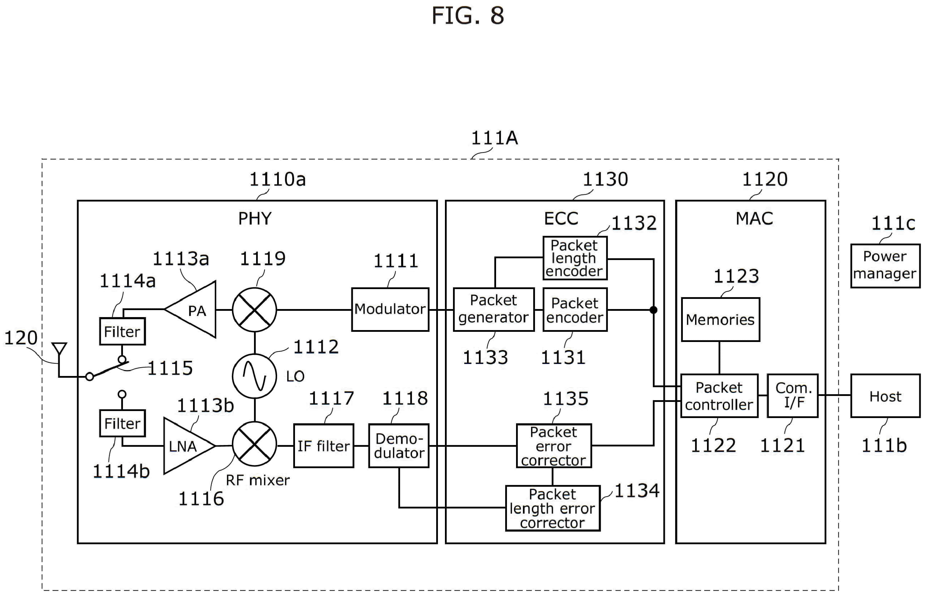

   FIG. 8 illustrates an example of a configuration of a first wireless communication circuit according to Variation 1 of Embodiment 1.
[FIG. 9]

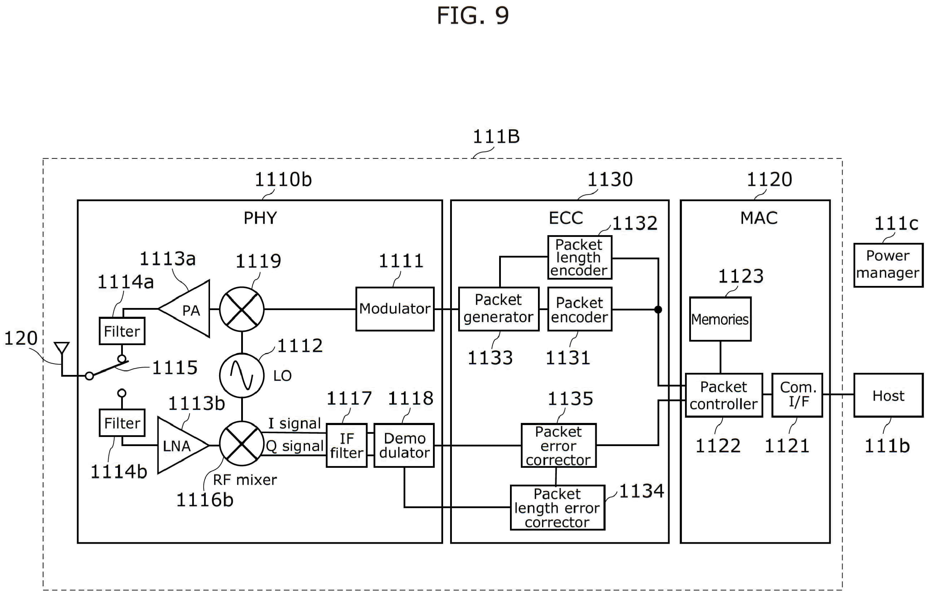

   FIG. 9 illustrates another example of the configuration of the first wireless communication circuit according to Variation 1 of Embodiment 1.
[FIG. 10A]

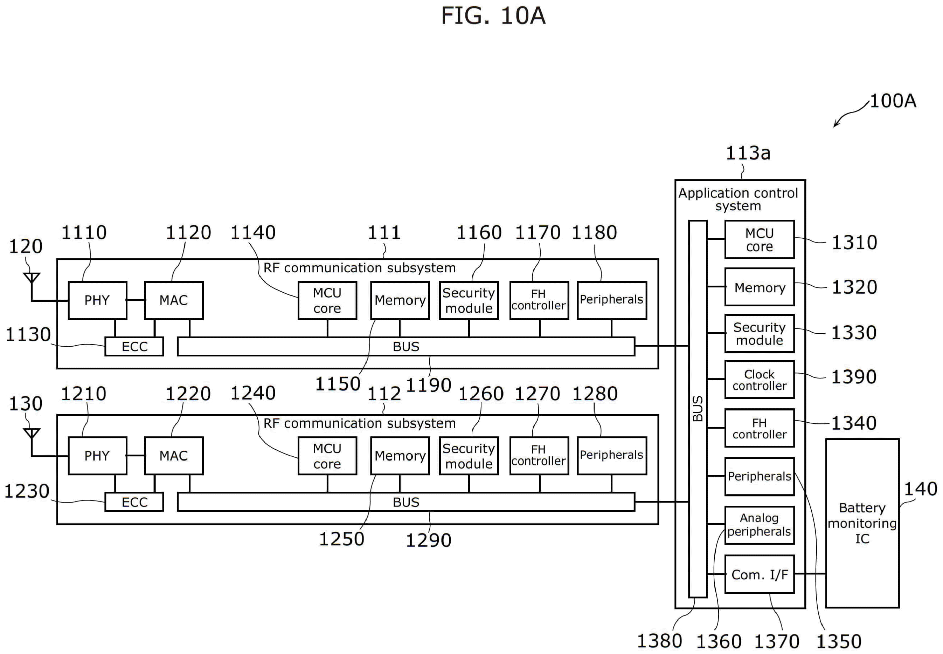

   FIG. 10A illustrates a detailed configuration of a monitoring circuit according to Variation 2 of Embodiment 1.
[FIG. 10B]

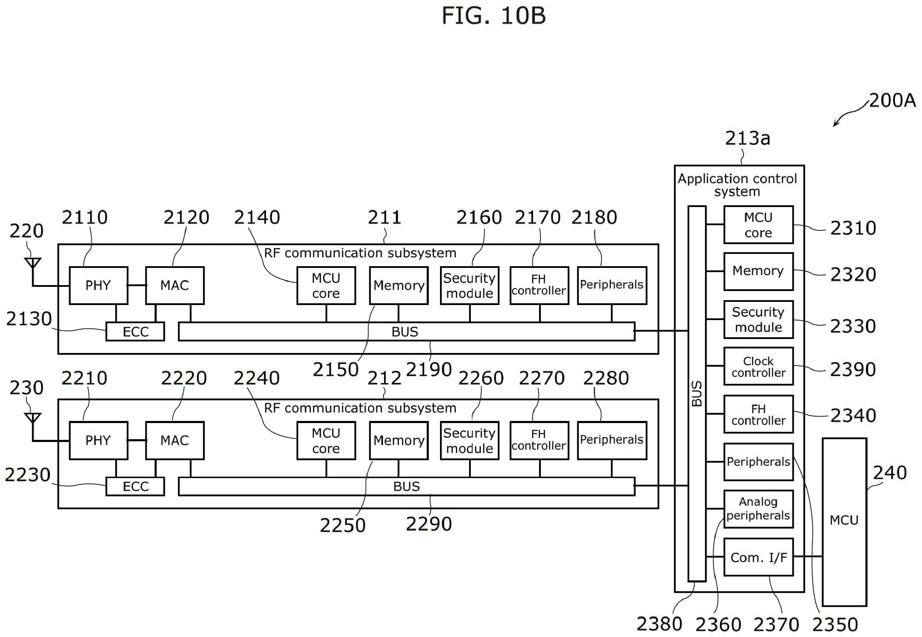

   FIG. 10B illustrates a detailed configuration of a management circuit according to Variation 2 of Embodiment 1.
[FIG. 11]

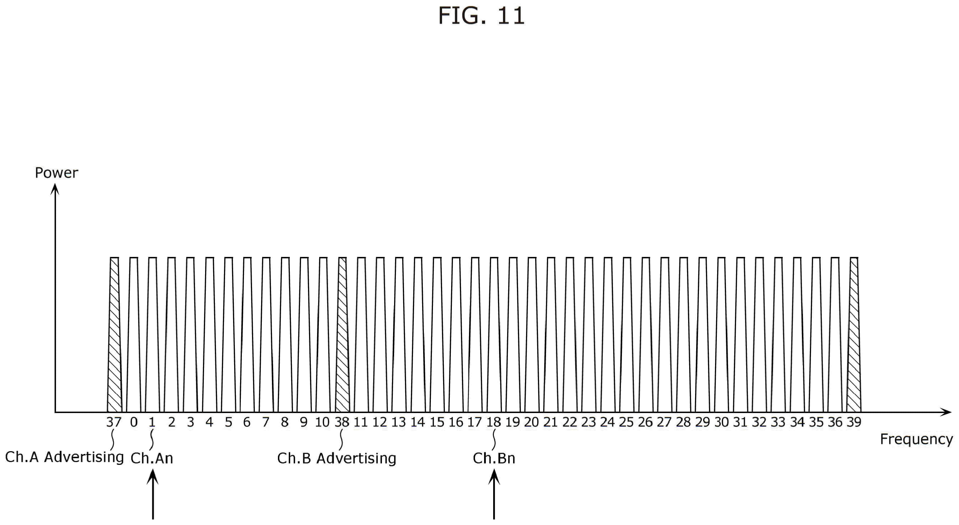

   FIG. 11 is a figure for explaining wireless communication frequency bands according to Embodiment 2.
[FIG. 12]

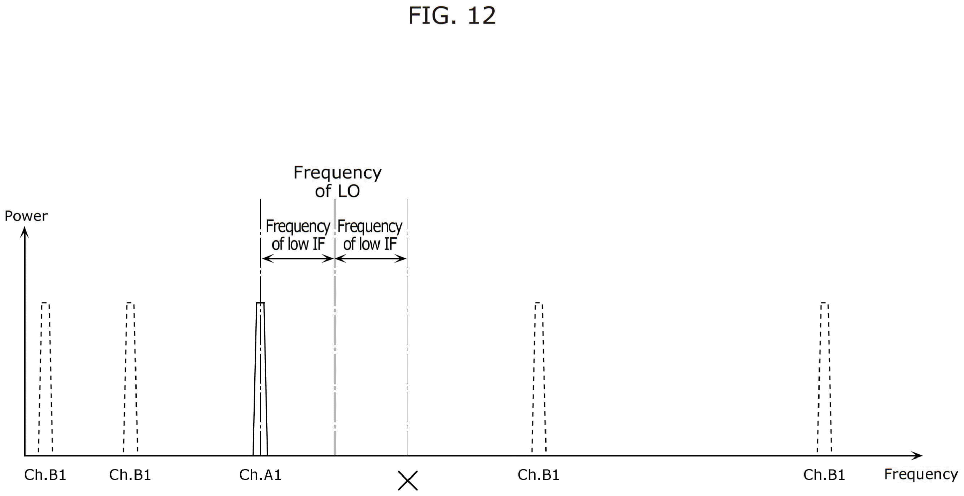

   FIG. 12 is a figure for explaining a rule by which to select a frequency for wireless communication according to Embodiment 2.
[FIG. 13]

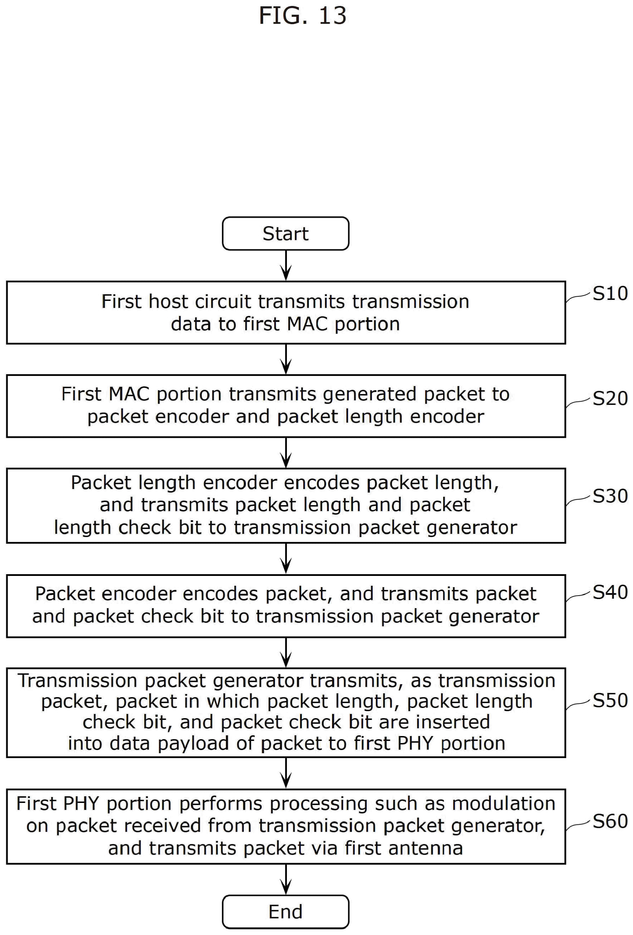

   FIG. 13 is a flowchart illustrating operation of a monitoring system according to Embodiment 3 during transmission.
[FIG. 14A]

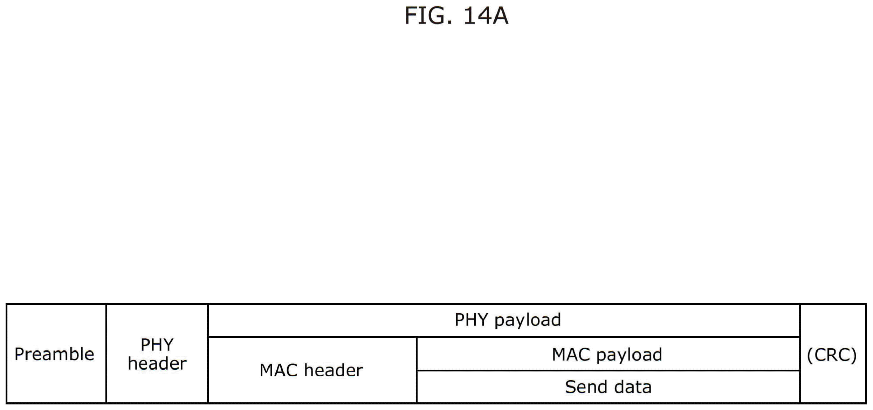

   FIG. 14A illustrates a packet configuration of a packet transmitted to an ECC portion according to Embodiment 3.
[FIG. 14B]

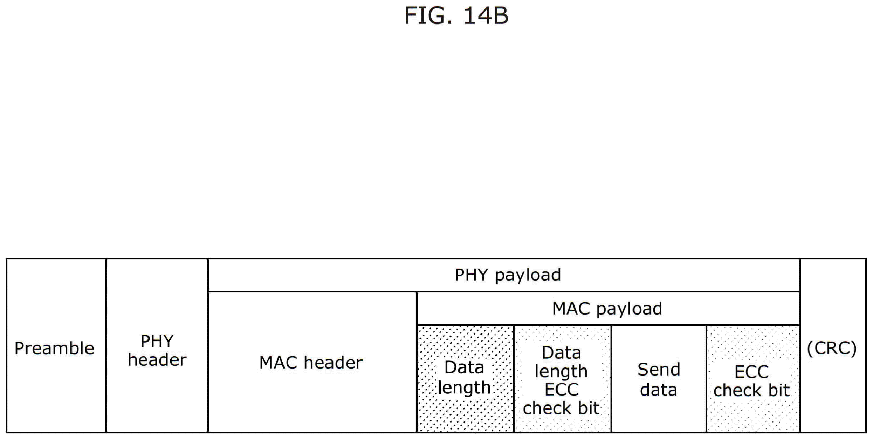

   FIG. 14B illustrates an example of a packet configuration during transmission according to Embodiment 3.
[FIG. 14C]

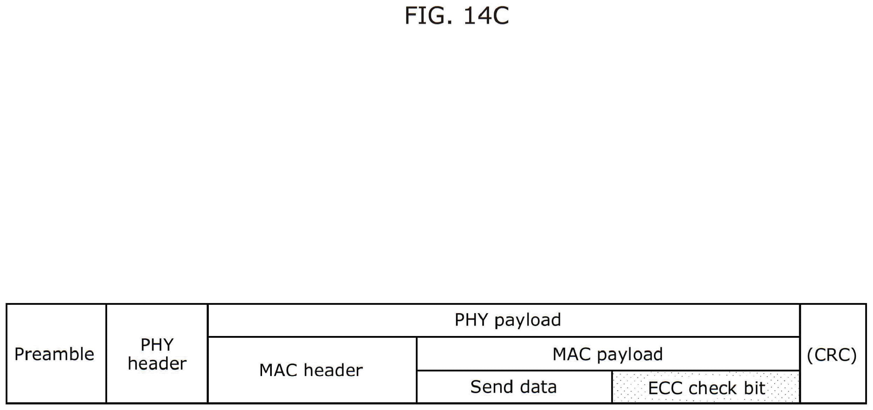

   FIG. 14C illustrates another example of the packet configuration during transmission according to Embodiment 3.
[FIG. 14D]

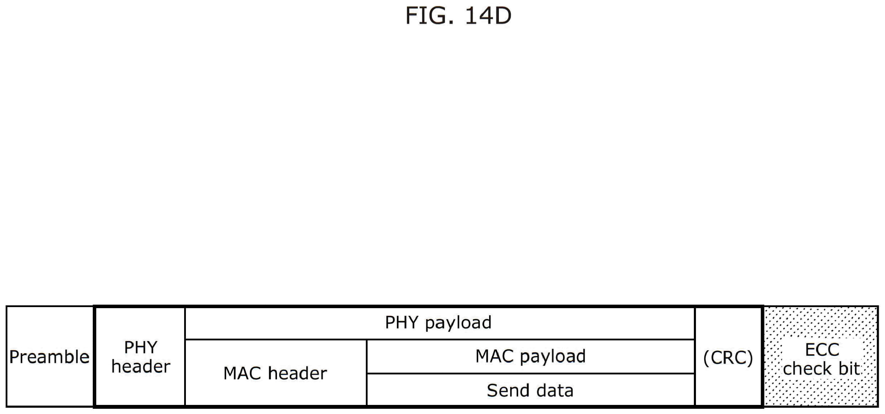

   FIG. 14D illustrates an example of a packet configuration during processing according to Embodiment 3.
[FIG. 15A]

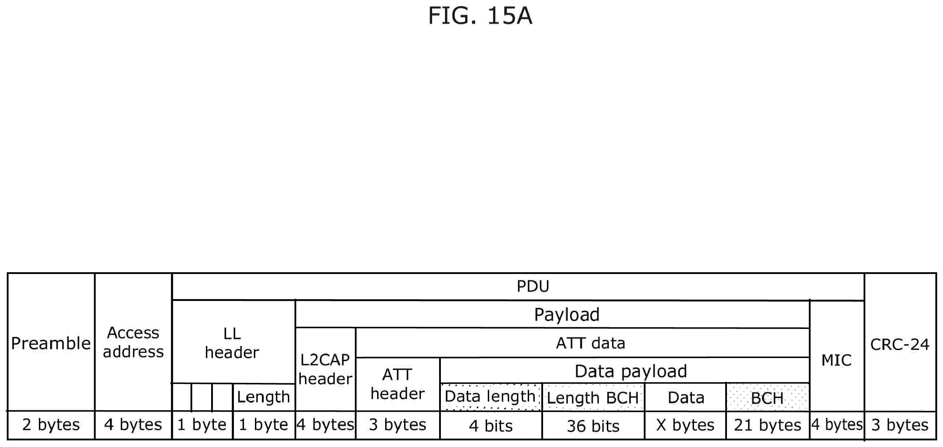

   FIG. 15A illustrates an example of a packet configuration according to Embodiment 3, when applied to a BLE packet.
[FIG. 15B]

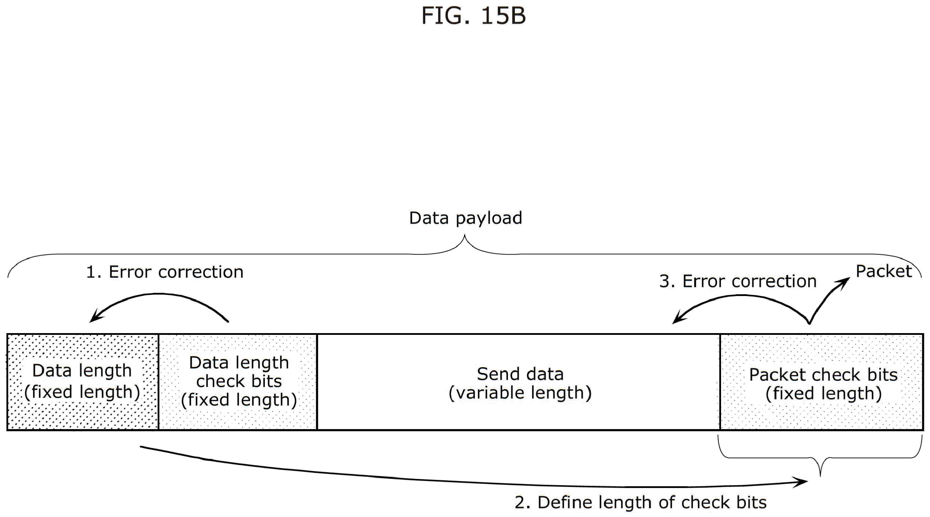

   FIG. 15B illustrates an example of a payload configuration in a packet according to Embodiment 3, when applied to a BLE packet.
[FIG. 16A]

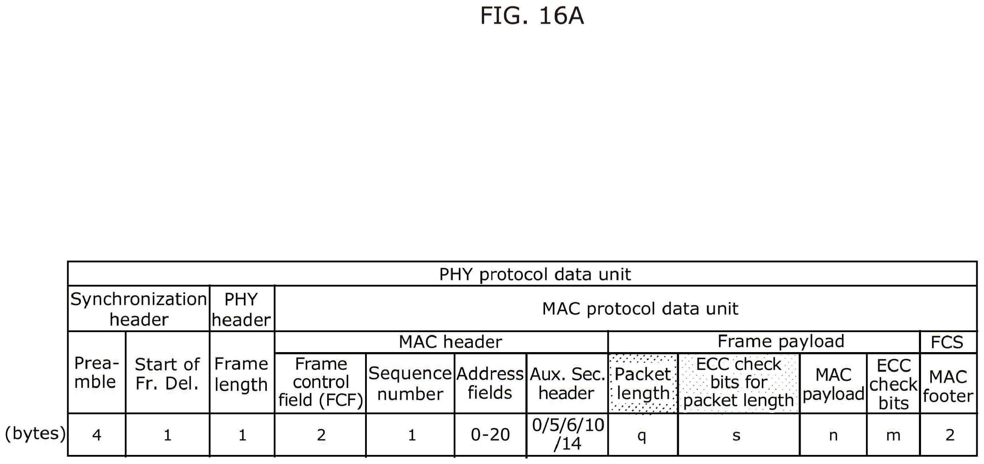

   FIG. 16A illustrates an example of a packet configuration during communication according to Embodiment 3, when applied to an IEEE 802.15.4 packet.
[FIG. 16B]

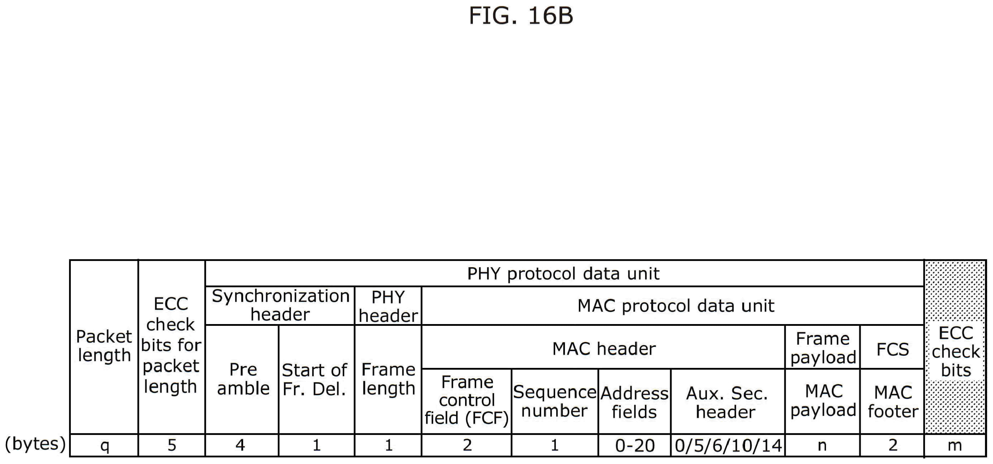

   FIG. 16B illustrates an example of a packet configuration during processing according to Embodiment 3, when applied to an IEEE 802.15.4 packet.
[FIG. 17]

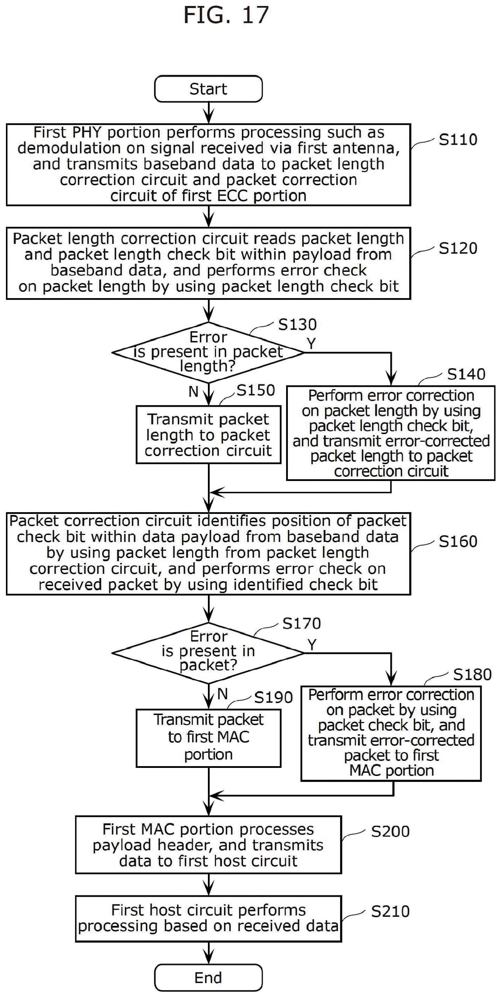

   FIG. 17 is a flowchart illustrating operation of the monitoring system according to Embodiment 3 during reception.
[FIG. 18]

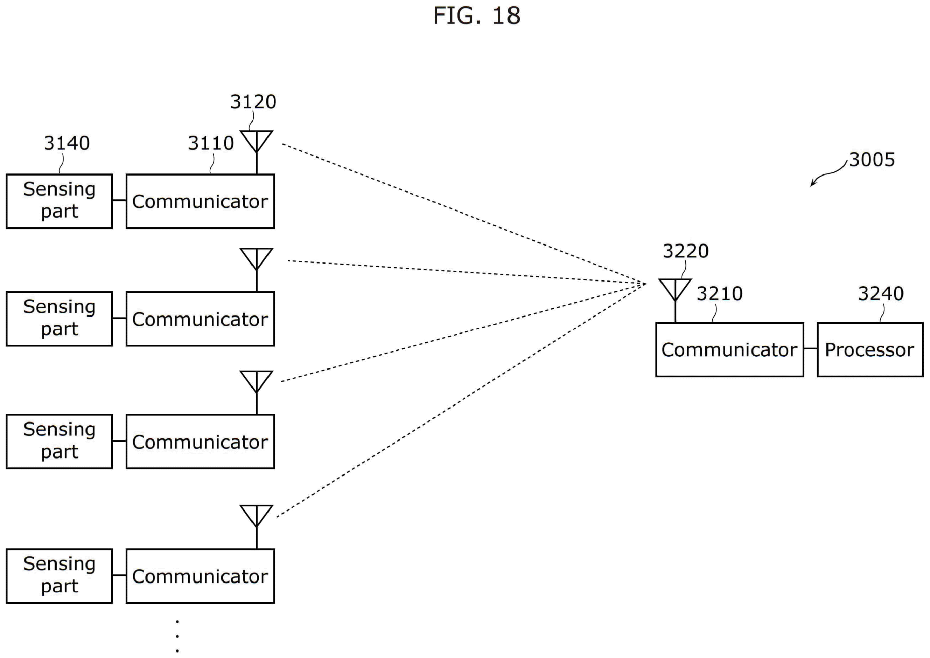

   FIG. 18 is a figure for explaining communication in a monitoring system according to a variation of Embodiment 3.
[FIG. 19]

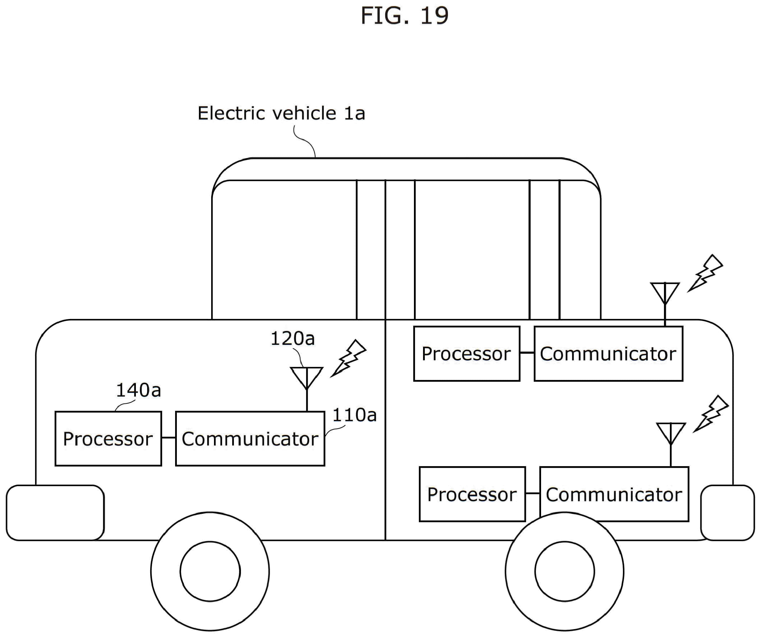

   FIG. 19 is a first figure illustrating an application example of the monitoring system.
[FIG. 20]

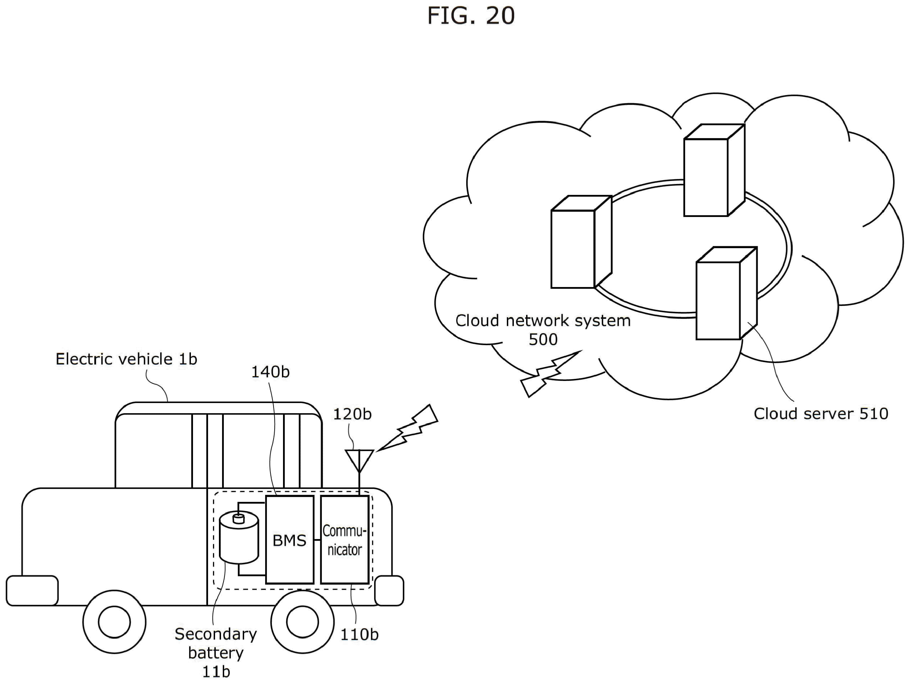

   FIG. 20 is a second figure illustrating an application example of the monitoring system.
[FIG. 21]

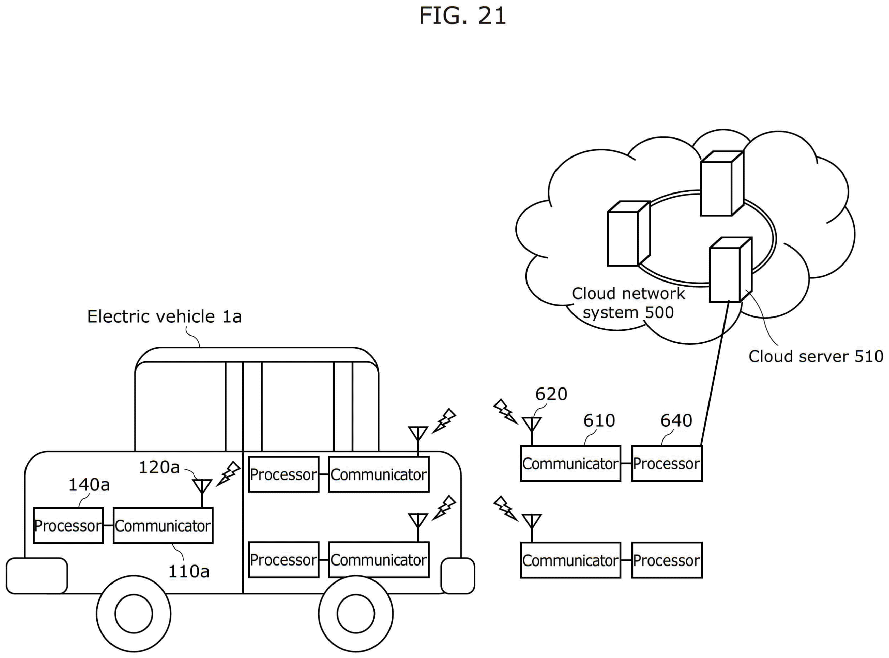

   FIG. 21 is a third figure illustrating an application example of the monitoring system.

### [Description of Embodiments]

Hereinafter, embodiments and so forth are described in detail with reference to the drawings.

It should be noted that the embodiments described below each indicate a comprehensive or specific example. The numerical values, shapes, elements, arrangement and connection of the elements, steps, order of steps, and so forth indicated in the embodiments described below are merely examples, and do not intend to limit the present disclosure. Moreover, among the elements described in the embodiments below, those not recited in any of the independent claims are described as optional elements.

Moreover, the figures are schematic illustrations and are not necessarily precise depictions. Accordingly, the scales and so forth used in the figures are not necessarily the same. Moreover, in the figures, substantially the same elements are assigned the same reference signs, and overlapping explanations are omitted or simplified. Moreover, for convenience, English notations are included in some parts of the drawings for reference. The English notations in the drawings may not necessarily match the Japanese terminology in the specification.

Moreover, in this specification, terms indicating relationships between elements, such as "same", and numerical values and ranges, should not be construed as limited to their strict interpretation. Rather, they are intended to encompass substantially equivalent ranges, including variations of, for example, a few percent (or approximately 10 percent).

Moreover, the term "above" (e.g., "above a battery module") applies not only when two elements are spaced apart from each other with another element present between the two elements, but also when the two elements are in direct contact with each other.

Moreover, in this specification, ordinal numbers such as "first" and "second" are used for the purpose of distinguishing between similar elements to avoid confusion, and do not indicate the quantity or order of the elements unless explicitly stated otherwise.

### [Embodiment 1]

Since wireless communication systems (for example, a low-speed wireless communication system, such as Bluetooth (registered trademark; hereinafter the same) low energy (BLE)) are susceptible to malicious attacks, such as hacking, there is a need to realize secure wireless communication. For example, data authenticity in wireless communication is important to realize secure wireless communication. For instance, in wireless communication, dealing with cybersecurity (for instance, to verify the authenticity of the communication partner) is important. In the automotive industry, the international standard ISO/SAE21434, which specifies requirements for cybersecurity measures, is issued, and it is important to deal with cybersecurity, especially in the automotive industry. It should be noted that authenticity means that transmitted and received data is genuine.

Thus, performing communication of information for secure wireless communication that addresses cybersecurity concerns is considered. However, communication delay of data to be transmitted may occur due to the communication of the above information. For instance, there is a need for secure wireless communication systems to perform public-key encryption using, for example, the AES, as a countermeasure against external attack risks. When secure and low-latency communication is requested for low-speed wireless communication systems, such as BLE, communication delay due to cryptographic key exchange may become an issue.

As described above, conventionally, it has been difficult to enhance communication quality while suppressing communication delay. In view of this, in Embodiment 1, a wireless communication device capable of enhancing communication quality while suppressing communication delay, is described. For instance, a wireless communication device capable of both performing secure wireless communication and suppressing communication delay is described. Specifically, a wireless communication device capable of data communication using two wireless communication circuits is described. For instance, a wireless communication device is described that is capable of improving security functions while suppressing communication delay, by using one wireless communication circuit for data communication, and the other for cryptographic key communication.

Thus, it is possible to improve security functions by updating and exchanging cryptographic keys regularly as a measure against cybersecurity risks, while suppressing the stop or delay of communication of data to be transmitted. Secure wireless communication is important to ensure, for instance, robust wireless communication quality.

### [1-1. Configuration of Monitoring System]

Hereinafter, a monitoring system according to Embodiment 1 is described with reference to FIGS. 1 to 7. FIG. 1 is a schematic diagram illustrating vehicle 1 provided with monitoring system 5 according to Embodiment 1. In Embodiment 1, an example in which monitoring system 5 is a battery management system (hereinafter, also referred to as a BMS) is described. It should be noted that monitoring system 5 is not limited to a BMS.

As illustrated in FIG. 1, monitoring system 5 is disposed below seats 2 of vehicle 1. Specifically, monitoring system 5 is disposed in a space (closed space) between seats 2 and chassis 3. The space is a small space. That is, monitoring system 5 is disposed and used in a small space.

An assembled battery including battery cells 11a, management circuit 200 that manages the assembled battery, and monitoring circuits 100 that monitor the assembled battery are disposed within the small space. Wireless communication is performed between management circuit 200 and each of monitoring circuits 100, and transmission channel L is formed within the small space. Moreover, management circuit 200 is connected to the assembled battery via junction box 4. Junction box 4 is also referred to as a control box.

It should be noted that vehicle 1 is, for example, an electric vehicle. A non-limiting example of vehicle 1 is an electric vehicle (EV), and vehicle 1 may alternatively be an electric train or the like.

FIG. 2 is an exterior drawing illustrating an example of monitoring system 5 according to Embodiment 1.

Monitoring system 5 is a system for managing the assembled battery. For instance, monitoring system 5 manages the state of charge (SOC), state of health (SOH), state of power (SOP), and so forth of the assembled battery. Moreover, monitoring system 5 monitors an anomaly in the assembled battery. Monitoring system 5 includes management circuit 200 that manages the assembled battery and monitoring circuits 100 that monitor the assembled battery. Moreover, monitoring system 5 may include another assembled battery. For instance, the assembled battery is configured by connecting battery modules 11 in series or parallel. Battery module 11 is referred to as a battery pack, and configured to accommodate one or more battery cells 11a inside a battery case. When battery module 11 includes battery cells 11a, battery cells 11a are connected in series. It should be noted that battery cell 11a is also referred to as a battery. For instance, battery cell 11a is exemplified by, but is not limited to, a lithium-ion battery. Moreover, for instance, monitoring circuits 100 are respectively disposed above battery modules 11.

Monitoring circuit 100 is a unit that monitors battery cells 11a of battery module 11, and includes wireless communication device 110, first antenna 120, second antenna 130, battery monitoring integrated circuit (IC) 140, and switch 150. A specific example of monitoring circuit 100 is a cell management unit (CMU). Battery cell 11a (or the assembled battery) is an example of a monitoring target of monitoring circuit 100.

Wireless communication device 110 is a device for allowing monitoring circuit 100 to wirelessly communicate with management circuit 200. For instance, wireless communication device 110 transmits data obtained by monitoring circuit 100 to management circuit 200 via wireless communication. A configuration of wireless communication device 110 is described later with reference to FIGS. 3A and 3B.

First antenna 120 and second antenna 130 are antennas for wireless communication. At least one of first antenna 120 or second antenna 130 may be a short-range wireless communication antenna. In Embodiment 1, each of first antenna 120 and second antenna 130 is a short-range wireless communication antenna.

Wireless communication protocols for short-range wireless communication may include, but are not limited to, at least one of the Bluetooth protocol (Bluetooth) or IEEE 802.15.4 protocol, and may include Wi-Fi (registered trademark; hereinafter the same) and ZigBee (registered trademark), for example. Moreover, Bluetooth may be Bluetooth Low Energy (BLE).

Battery monitoring IC 140 is an IC that measures the voltage of battery cell 11a. For instance, battery monitoring IC 140 can measure the voltage of each of one or more battery cells 11a within battery module 11.

Switch 150 is usable in wireless communication device 110. Switch 150 is an operation button for instructing corresponding monitoring circuit 100 to perform pairing with management circuit 200. For instance, upon user's operation on switch 150, switch 150 outputs a pairing start signal to monitoring circuit 100. By doing so, monitoring circuit 100 establishes pairing with management circuit 200 according to the pairing start signal.

It should be noted that FIG. 2 illustrates an example in which monitoring circuit 100 is disposed above battery module 11. However, as long as monitoring circuit 100 can communicate with management circuit 200, the position at which monitoring circuit 100 is disposed is not limited to the above-mentioned position. For instance, monitoring circuit 100 may be disposed inside battery module 11, and may be disposed on a side of battery module 11.

It should be noted that monitoring circuit 100 does not include a switch for switching the antenna for communication from one of first antenna 120 or second antenna 130 to the other.

Management circuit 200 and monitoring circuit 100 together create the BMS. Management circuit 200 obtains data such as the voltage value of each battery cell 11a from each monitoring circuit 100 via wireless communication device 210.

It should be noted that FIG. 2 illustrates an example in which management circuit 200 is disposed above junction box 4. However, as long as management circuit 200 can communicate with monitoring circuits 100, the position at which management circuit 200 is disposed is not limited to the above-mentioned position. For instance, management circuit 200 may be disposed inside junction box 4, and may be disposed on a side of junction box 4.

FIG. 3A illustrates an overview configuration of monitoring circuit 100 according to Embodiment 1. It should be noted that FIGS. 3A and 3B also illustrate battery cell 11a.

As illustrated in FIG. 3A, wireless communication device 110 includes first wireless communication subsystem 111, second wireless communication subsystem 112, and control system 113.

First wireless communication subsystem 111 and second wireless communication subsystem 112 are subsystems that perform wireless communication, and each of the subsystems is connected to control system 113.

Control system 113 is connected to and controls each of first wireless communication subsystem 111, second wireless communication subsystem 112, and battery monitoring IC 140.

First antenna 120 is connected to first wireless communication subsystem 111, and radiates radio waves corresponding to a signal from first wireless communication subsystem 111. Additionally, first antenna 120 receives radio waves from another device (for example, management circuit 200), and outputs the radio waves to first wireless communication subsystem 111.

Second antenna 130 is connected to second wireless communication subsystem 112, and radiates radio waves corresponding to a signal from second wireless communication subsystem 112. Additionally, second antenna 130 receives radio waves from another device (for example, management circuit 200), and outputs the radio waves to second wireless communication subsystem 112.

As illustrated in FIGS. 3A and 2, in Embodiment 1, first wireless communication subsystem 111, second wireless communication subsystem 112, and control system 113 are configured as a single-chip semiconductor device. A transceiver large scale integration (LSI) is configured to include first wireless communication subsystem 111, second wireless communication subsystem 112, and control system 113. A single chip means that a circuit included in first wireless communication subsystem 111, a circuit included in second wireless communication subsystem 112, and a circuit included in control system 113 are configured as a single semiconductor device, and that the above circuits are, for example, disposed on the same semiconductor device (for instance, on a single IC chip or a device where two or more IC chips are configured as a single package). That is, a single semiconductor device may be configured to include just one IC chip inside the package, and may be configured to include a plurality of IC chips inside the package.

FIG. 3B illustrates a detailed configuration of monitoring circuit 100 according to Embodiment 1. It should be noted that first wireless communication subsystem 111 and second wireless communication subsystem 112 have the same configuration. In the following description, the focus is on a configuration of first wireless communication subsystem 111, and explanations of a configuration of second wireless communication subsystem 112 are omitted.

As illustrated in FIG. 3B, first wireless communication subsystem 111 includes first wireless communication circuit 111a and first host circuit 111b.

First wireless communication circuit 111a includes first physical layer (PHY) portion 1110, first medium access control (MAC) portion 1120, and first error correction circuit (ECC) portion 1130.

First PHY portion 1110 has functions of the physical layer of the Open Systems Interconnection (OSI) reference model. First PHY portion 1110 includes an analog circuit that converts one of a baseband signal or a modulated signal into the other. The following explanation uses transmission as an example. A baseband signal is, for example, a signal from first MAC portion 1120, and in Embodiment 1, the baseband signal is a rectangular wave signal outputted from first MAC portion 1120 to first PHY portion 1110 via first ECC portion 1130.

It should be noted that second PHY portion 1210 has a configuration and functions similar to those of first PHY portion 1110.

First MAC portion 1120 has functions of the media link layer of the OSI reference model, and includes a digital circuit that performs packet generation and packet readout. First MAC portion 1120 is connected to first PHY portion 1110, and is connected to control system 113 via first bus 1190.

It should be noted that second MAC portion 1220 is connected to second PHY portion 1210, and is connected to control system 113 via second bus 1290. Second MAC portion 1220 has a configuration and functions similar to those of first MAC portion 1120.

First ECC portion 1130 performs error-correction related processing for transmitted and received packets. First ECC portion 1130 adds error correction data (for example, check bits (including one or more bits)) to a packet to be transmitted, and corrects an error in a received packet using error correction data added to the received packet. Error detection and correction are possible by using the error correction data, and the error correction data may be, for example, an error-correcting code.

First ECC portion 1130 is connected to each of first PHY portion 1110 and first MAC portion 1120, and performs the error-correction related processing on a passing signal. In Embodiment 1, first ECC portion 1130 is connected between first PHY portion 1110 and first MAC portion 1120 (for example, refer to FIG. 4, which is described later).

It should be noted that second ECC portion 1230 is connected to each of second PHY portion 1210 and second MAC portion 1220, and has a configuration and functions similar to those of first ECC portion 1130.

It should be noted that in Embodiment 1, first PHY portion 1110 and first MAC portion 1120 are communicably connected. That is, data can be transmitted and received between first PHY portion 1110 and first MAC portion 1120 without using first ECC portion 1130, and a bypass path directly connecting first PHY portion 1110 and first MAC portion 1120 is formed. For instance, a packet that does not require error correction can be directly transmitted and received between first PHY portion 1110 and first MAC portion 1120. It should be noted that first PHY portion 1110 and first MAC portion 1120 need not be connected in a way that enables direct communication. For instance, the bypass path directly connecting first PHY portion 1110 and first MAC portion 1120 need not be formed.

It should be noted that an example in which wireless communication device 110 includes first ECC portion 1130 and second ECC portion 1230 is described above. However, in Embodiment 1, wireless communication device 110 need not include first ECC portion 1130 or second ECC portion 1230. For instance, first wireless communication subsystem 111 may include only first PHY portion 1110 and first MAC portion 1120 out of first PHY portion 1110, first MAC portion 1120, and first ECC portion 1130.

FIG. 4 illustrates a configuration of first wireless communication circuit 111a according to Embodiment 1. It should be noted that a configuration of second wireless communication circuit 112a is similar to that of first wireless communication circuit 111a, and explanations thereof are omitted. Moreover, in FIG. 4, illustration of a communication path directly connecting first PHY portion 1110 and first MAC portion 1120 is omitted.

As illustrated in FIG. 4, first PHY portion 1110 of first wireless communication circuit 111a includes modulator 1111, oscillator 1112, power amplifier 1113a, linear amplifier 1113b, filter 1114a, filter 1114b, switch 1115, mixer 1116, intermediate frequency (IF) filter 1117, and demodulator 1118.

Modulator 1111 receives an input of a transmission packet from first ECC portion 1130, and converts a data sequence into a modulated signal. The modulated signal is input into oscillator 1112.

Oscillator 1112 is a local oscillator that oscillates at an RF signal frequency.

Power amplifier 1113a is an amplifier that amplifies the power of an RF signal from oscillator 1112.

Filter 1114a is a filter that removes unnecessary frequency components of a signal from power amplifier 1113a. A non-limiting example of filter 1114a is a band-pass filter.

Switch 1115 is for switching between transmission and reception. The example in FIG. 4 shows connection by switch 1115 during transmission, and first antenna 120 and filter 1114a are connected by switch 1115.

Filter 1114b is a filter that removes unnecessary frequency components from a received signal received via first antenna 120. A non-limiting example of filter 1114b is a band-pass filter.

Linear amplifier 1113b is an amplifier that amplifies the power of the received signal.

Mixer 1116 mixes the received signal from linear amplifier 1113b with the signal from oscillator 1112, and extracts necessary frequencies. By mixing the received signal, which is an RF signal, with the signal from oscillator 1112, mixer 1116 converts the received signal into an IF signal with a frequency lower than that of the received signal.

IF filter 1117 removes unnecessary components from the IF signal obtained by the mixing.

Demodulator 1118 demodulates the IF signal (modulated signal) from IF filter 1117. That is, demodulator 1118 has the function of demodulating the modulated signal into the data sequence (baseband data).

First MAC portion 1120 includes communication circuit 1121, output circuit 1122, and memories 1123.

Communication circuit 1121 is a circuit that performs communication processing between first host circuit 111b and output circuit 1122.

Output circuit 1122 is a circuit that outputs transmission data obtained from first host circuit 111b, as a packet (a first transmission packet).

Memories 1123 are memory devices configured to hold information regarding communication and control. As a non-limiting example, memories 1123 are embodied as semiconductor memories.

First ECC portion 1130 includes packet encoder 1131, packet length encoder 1132, transmission packet generation circuit 1133, packet length correction circuit 1134, and packet error correction circuit 1135.

Packet encoder 1131 is a circuit that performs processing on the entire first transmission packet using the ECC to generate packet check bits (including one or more bits). For instance, packet encoder 1131 performs error correction encoding on the first transmission packet to generate packet check bits. The packet check bits include check bits that enable error detection and correction in a transmitted packet upon receipt of the transmitted packet, and includes, for example, check bits that enable error correction for header information and payload information included in the first transmission packet. For instance, the packet check bits can also be said to be an error code that enables error correction for a header and a payload included in a physical layer packet. Packet encoder 1131 is an example of a packet encoder.

Packet length encoder 1132 is a circuit that generates a packet length and packet length check bits (including one or more bits) from the first transmission packet. For instance, packet length encoder 1132 generates the packet length of a first transmission packet from the first transmission packet, and performs error correction encoding on the generated packet length to generate packet length check bits. The packet length check bits include check bits that enable error detection and correction for a packet length (a bit sequence indicating the packet length of data) included in a transmitted packet upon receipt of the transmitted packet, and includes, for example, check bits that enable error correction for data included in payload information included in the first transmission packet. For instance, the packet length check bits can also be said to be an error code that enables error correction for the packet length of the data of a payload included in a physical layer packet. Packet length encoder 1132 is an example of a packet length encoder.

Transmission packet generation circuit 1133 is a circuit that generates a packet (a second transmission packet) with the packet length, packet length check bits, and packet check bits inserted into the packet payload. Transmission packet generation circuit 1133 generates a second transmission packet that includes the first transmission packet, the packet length, the packet length check bits, and the packet check bits, and conforms to any communication standard. Transmission packet generation circuit 1133 is an example of a packet generator.

Packet length correction circuit 1134 is a circuit that performs error detection and correction for a packet length included in baseband data (a baseband signal) from demodulator 1118. Packet length error corrector 1134 generates (extracts) a packet length and packet length check bits from the baseband data from demodulator 1118, and performs error detection and correction on the packet length. For instance, packet length correction circuit 1134 performs error correction processing on the packet length of a first reception packet by using packet length check bits generated through error correction encoding of a packet length, to generate an error-corrected packet length, the first reception packet including the packet length check bits and packet check bits generated through error correction encoding of a packet. Packet length correction circuit 1134 is an example of a packet length corrector.

Packet correction circuit 1135 is a circuit that performs error detection and correction for a packet included in the baseband data from demodulator 1118. Packet correction circuit 1135 generates (extracts) packet check bits from the baseband data including a correct packet length, and performs error detection and correction on the packet. For instance, packet correction circuit 1135 performs packet error correction processing on the first reception packet by using the error-corrected packet length and the packet check bits, to generate a second reception packet (corrected reception packet) through the packet error correction processing. Packet correction circuit 1135 is an example of a packet corrector.

Power management unit 111c, for example, manages the power consumption of first wireless communication circuit 111a.

It should be noted that when first wireless communication subsystem 111 does not include first ECC portion 1130, output circuit 1122 is connected to modulator 1111 and demodulator 1118.

The description now returns to FIG. 3B. First host circuit 111b is a circuit serving as a host that controls communication in first wireless communication subsystem 111, and includes microcontroller unit (MCU) core 1140, memory 1150, security module 1160, frequency hopping (FH) controller 1170, peripheral circuitry 1180, and first bus 1190.

MCU core 1140 is a microcontroller that performs processing related to wireless communication.

Memory 1150 is a memory device for holding communication data and a control program. Moreover, memory 1150 may hold information used by security module 1160 to generate a cryptographic key. As a non-limiting example, memory 1150 is embodied as semiconductor memory.

Security module 1160 performs processing for enhancing the security in communication using first wireless communication circuit 111a. Security module 1160 is, for example, a circuit (circuitry) that generates a cryptographic key for communication and performs encryption.

FIG. 5 illustrates a configuration of security module 1160 according to Embodiment 1.

As illustrated in FIG. 5, security module 1160 includes first encryption circuit 1161, second encryption circuit 1162, third encryption circuit 1163, calculation circuit 1164, random number generator 1165, controller 1166, and interface 1167.

Each of first encryption circuit 1161 through third encryption circuit 1163 encrypts data using a different encryption scheme.

First encryption circuit 1161 performs encryption using, for example, Advanced Encryption Standard (AES) cryptography, where encryption is performed using a cryptographic key of a predetermined number of bits. In Embodiment 1, AES-128, which has a key length of 128 bits, is used. However, the key length is not limited to the above, and may be 192 bits and 256 bits, for example.

Second encryption circuit 1162 performs encryption using, for example, elliptic curve cryptography (ECC). In Embodiment 1, ECC-256, which has a key length of 256 bits, is used. However, the key length is not limited to the above, and may be other than a 256-bit key length.

Third encryption circuit 1163 performs encryption using, for example, public-key cryptography. Third encryption circuit 1163 performs encryption using, for example, Rivest-Shamir-Adleman (RSA) cryptography. In Embodiment 1, third encryption circuit 1163 uses RSA-3072, which has a key length of 3072 bits. However, the key length is not limited to the above, and may be 2048 bits and 4096 bits, for example.

Calculation circuit 1164 calculates, from input data (transmitted data), a hash value for verifying data tampering at the receiving device. Calculation circuit 1164 may calculate, for example, a fixed-length hash value from data of any length. In Embodiment 1, calculation circuit 1164 calculates a hash value using a hash function (SHA-512 (Secure Hash Algorithm 512-bit)) for calculating a 512-bit hash value from data of any length.

Random number generator 1165 generates random numbers used for encrypting input data. For instance, the input data may be pseudo-encrypted using random numbers and a logical operation. Although random number generator 1165 is a hardware random number generator that generates random numbers using random physical phenomena, random number generator 1165 may be configured to generate random numbers (for example, pseudo-random numbers) using a random number generation algorithm (software).

Controller 1166 is a control device that controls each process of security module 1160. For instance, controller 1166 may cause one of first encryption circuit 1161 through third encryption circuit 1163 to encrypt transmission data and decrypt received data. Moreover, when the encryption circuit used for encryption is changed, controller 1166 may transmit the public key corresponding to the private key of an encryption circuit after the change to management circuit 200 via first wireless communication circuit 111a.

Interface 1167 is a communication interface for communicating with an external circuit and so forth.

It should be noted that the number of the encryption circuits of security module 1160 is not limited to three, and may be one or more. Moreover, an encryption scheme different from the above three encryption schemes may be used. Moreover, security module 1160 may be able to generate new cryptographic keys (for example, a set of private and public keys) for communication.

It should be noted that security module 1260 has a configuration and functions similar to those of security module 1160.

The description now returns to FIG. 3B. FH controller 1170 is a processor that performs processing related to a frequency used for communication. In Embodiment 1, as a non-limiting example, FH controller 1170 controls first wireless communication circuit 111a to communicate using the frequency determined by FH controller 1340. For instance, FH controller 1170 may be able to perform at least some of the processing performed by FH controller 1340. For instance, FH controller 1170 may perform processing for selecting a frequency used for communication. Moreover, FH controller 1170 may hold information (for example, a map) used for selecting a frequency.

It should be noted that FH controller 1270 has a configuration and functions similar to those of FH controller 1170.

Peripheral circuitry 1180 is peripheral circuitry as a microcontroller. Peripheral circuitry 1180 includes peripheral circuits necessary for operation of the microcontroller. Peripheral circuitry 1180 includes, but is not limited to, a power supply circuit for power supply and an oscillator circuit for clock supply.

It should be noted that peripheral circuitry 1280 has a configuration and functions similar to those of peripheral circuitry 1180.

First bus 1190 connects each of the elements of first host circuit 111b (MCU core 1140 through peripheral circuitry 1180). Moreover, first bus 1190 connects first host circuit 111b and each of first MAC portion 1120 and control system 113.

Second host circuit 112b is a circuit serving as a host that controls communication in second wireless communication subsystem 112, and includes MCU core 1240, memory 1250, security module 1260, FH controller 1270, and peripheral circuitry 1280.

MCU core 1140 and MCU core 1240 have similar configurations, memory 1150 and memory 1250 have similar configurations, and security module 1160 and security module 1260 have similar configurations. Moreover, FH controller 1170 and FH controller 1270 have similar configurations, and peripheral circuitry 1180 and peripheral circuitry 1280 have similar configurations.

As such, monitoring circuit 100 includes the set of first wireless communication subsystem 111 and first antenna 120, the set of second wireless communication subsystem 112 and second antenna 130, and single control system 113. Thus, there is no need to switch between antennas used for communication by means of a switch or the like, which makes it possible to transmit and receive radio waves simultaneously from each of first antenna 120 and second antenna 130. Moreover, the switch can be omitted.

Control system 113 includes MCU core 1310, memory 1320, security module 1330, FH controller 1340, first peripheral circuitry 1350, second peripheral circuitry 1360, communication circuit 1370, and third bus 1380.

MCU core 1310 is a microcontroller that performs overall processing related to wireless communication and overall processing from the peripheral circuits.

Memory 1320 is a memory device for holding communication data and a control program. Memory 1320 may store information concerning communication settings for first wireless communication subsystem 111 and second wireless communication subsystem 112. That is, memory 1320 may include a storage area for storing the information. As a non-limiting example, memory 1320 is embodied as semiconductor memory.

Security module 1330 performs processing for enhancing the security in communication performed by wireless communication device 110. Security module 1330 is, for example, a circuit (circuitry) that generates a cryptographic key for communication and performs encryption. A configuration of security module 1330 may be the same as that of security module 1160, that is, the configuration illustrated in FIG. 5.

FH controller 1340 is a processor that performs processing related to a frequency used for communication. In Embodiment 1, FH controller 1340 determines a frequency used for communication, and outputs the determined frequency to FH controller 1170 and FH controller 1270. FH controller 1340 may hold information (for example, a map) used for selecting a frequency. It should be noted that FH controller 1340 may hold a preset frequency, and control FH controller 1170 and FH controller 1270 to use the frequency for communication.

First peripheral circuitry 1350 is peripheral circuitry as a microcontroller, and includes peripheral circuits (for example, mainly digital circuits) necessary for operation of the microcontroller.

Second peripheral circuitry 1360 is peripheral circuitry as a microcontroller, and includes peripheral circuits (for example, mainly analog circuits) necessary for operation of the microcontroller.

Communication circuit 1370 is a communication interface that enables control system 113 to communicate with external destinations, such as battery monitoring IC 140.

Third bus 1380 connects each of the elements (MCU core 1310 through communication circuit 1370) of control system 113. Moreover, third bus 1380 is connected to each of first bus 1190 and second bus 1290.

Then, a configuration of management circuit 200 is described with reference to FIGS. 6A and 6B. FIG. 6A illustrates an overview configuration of management circuit 200 according to Embodiment 1.

As illustrated in FIG. 6A, management circuit 200 includes wireless communication device 210, first antenna 220, second antenna 230, and MCU 240.

Wireless communication device 210 is a communication device for allowing management circuit 200 to wirelessly communicate with monitoring circuit 100. Wireless communication device 210 includes first wireless communication subsystem 211, second wireless communication subsystem 212, and control system 213.

First wireless communication subsystem 211 and second wireless communication subsystem 212 are subsystems that perform wireless communication, and each of the subsystems is connected to control system 213.

Control system 213 controls first wireless communication subsystem 211 and second wireless communication subsystem 212, and communicates with MCU 240.

First antenna 220 is connected to first wireless communication subsystem 211, and radiates radio waves corresponding to a signal from first wireless communication subsystem 211. Additionally, first antenna 220 receives radio waves from another device (for example, monitoring circuit 100), and outputs the radio waves to first wireless communication subsystem 211.

Second antenna 230 is connected to second wireless communication subsystem 212, and radiates radio waves corresponding to a signal from second wireless communication subsystem 212. Additionally, second antenna 230 receives radio waves from another device (for example, monitoring circuit 100), and outputs the radio waves to second wireless communication subsystem 212.

MCU 240 is a processing device for managing battery cells 11a. For instance, MCU 240 manages data transmitted from monitoring circuit 100. For instance, MCU 240 manages the voltage value of each battery cell 11a and so forth. Moreover, MCU 240 performs determination for battery cell 11a. For instance, MCU 240 determines whether battery cell 11a is normal, based on the voltage value.

It should be noted that management circuit 200 does not include a switch for switching the antenna for communication from one of first antenna 220 or second antenna 230 to the other.

As illustrated in FIGS. 6A and 2, in Embodiment 1, first wireless communication subsystem 211, second wireless communication subsystem 212, and control system 213 are configured as a single semiconductor device. A transceiver LSI is configured to include first wireless communication subsystem 211, second wireless communication subsystem 212, and control system 213.

FIG. 6B illustrates a detailed configuration of management circuit 200 according to Embodiment 1. It should be noted that first wireless communication subsystem 211 and second wireless communication subsystem 212 have the same configuration. In the following description, the focus is on a configuration of first wireless communication subsystem 211, and explanations of a configuration of second wireless communication subsystem 212 are omitted. Moreover, the configuration of first wireless communication subsystem 211 may be similar to that of first wireless communication subsystem 111. The following primarily focuses on the correspondences and differences with first wireless communication subsystem 111.

As illustrated in FIG. 6B, first wireless communication subsystem 211 includes first wireless communication circuit 211a and first host circuit 211b.

First wireless communication circuit 211a includes first PHY portion 2110, first MAC portion 2120, and first ECC portion 2130. Second wireless communication circuit 212a includes second PHY portion 2210, second MAC portion 2220, and second ECC portion 2230. A configuration of each of first PHY portion 2110 and second PHY portion 2210 is similar to that of first PHY portion 1110. A configuration of each of first MAC portion 2120 and second MAC portion 2220 is similar to that of first MAC portion 1120. A configuration of each of first ECC portion 2130 and second ECC portion 2230 is similar to that of first ECC portion 1130.

First host circuit 211b is a circuit serving as a host that controls communication in first wireless communication subsystem 211, and includes MCU core 2140, memory 2150, security module 2160, FH controller 2170, and peripheral circuitry 2180. Second host circuit 212b is a circuit serving as a host that controls communication in second wireless communication subsystem 212, and includes MCU core 2240, memory 2250, security module 2260, FH controller 2270, and peripheral circuitry 2280.

A configuration of each of MCU core 2140 and MCU core 2240 is similar to that of MCU core 1140. A configuration of each of memory 2150 and memory 2250 is similar to that of memory 1150. A configuration of each of security module 2160 and security module 2260 is similar to that of security module 1160. Security module 2160 performs processing for enhancing the security in communication using first wireless communication circuit 211a, and security module 2260 performs processing for enhancing the security in communication using second wireless communication circuit 212a. Moreover, a configuration of each of FH controller 2170 and FH controller 2270 is similar to that of FH controller 1170, and a configuration of each of peripheral circuitry 2180 and peripheral circuitry 2280 is similar to that of peripheral circuitry 1180. In Embodiment 1, as a non-limiting example, FH controller 2170 controls first wireless communication circuit 211a to communicate using the frequency determined by FH controller 2340, and FH controller 2270 controls second wireless communication circuit 212a to communicate using the frequency determined by FH controller 2340.

As such, management circuit 200 includes the set of first wireless communication subsystem 211 and first antenna 220, the set of second wireless communication subsystem 212 and second antenna 230, and single control system 213. Thus, there is no need to switch between antennas used for communication by means of a switch or the like, which makes it possible to transmit and receive radio waves simultaneously from each of first antenna 220 and second antenna 230. Moreover, the switch can be omitted.

Control system 213 includes MCU core 2310, memory 2320, security module 2330, FH controller 2340, first peripheral circuitry 2350, second peripheral circuitry 2360, communication circuit 2370, and third bus 2380.

A configuration of MCU core 2310 is similar to that of MCU core 1310, a configuration of memory 2320 is similar to that of memory 1320, and a configuration of security module 2330 is similar to that of security module 1330. Memory 2320 may store information concerning communication settings for first wireless communication subsystem 211 and second wireless communication subsystem 212. That is, memory 2320 may include a storage area for storing the information.

Security module 2330 performs processing for enhancing the security in communication performed by wireless communication device 210. Security module 2330 is, for example, a circuit (circuitry) that generates a cryptographic key for communication and performs encryption. A configuration of security module 2330 may be the same as that of security module 1160, that is, the configuration illustrated in FIG. 5. Moreover, a configuration of FH controller 2340 is similar to that of FH controller 1340. A configuration of first peripheral circuitry 2350 is similar to that of first peripheral circuitry 1350. A configuration of second peripheral circuitry 2360 is similar to that of second peripheral circuitry 1360. A configuration of communication circuit 2370 is similar to that of communication circuit 1370. Communication circuit 2370 is a communication interface that enables control system 213 to communicate with external destinations, such as MCU 240.

Third bus 2380 connects each of the elements (MCU core 2310 through communication circuit 2370) of control system 213. Moreover, third bus 2380 is connected to each of first bus 2190 and second bus 2290.

It should be noted that an example in which wireless communication device 210 includes first ECC portion 2130 and second ECC portion 2230 is described above. However, in Embodiment 1, wireless communication device 210 need not include first ECC portion 2130 or second ECC portion 2230. For instance, first wireless communication subsystem 211 may include only first PHY portion 2110 and first MAC portion 2120 out of first PHY portion 2110, first MAC portion 2120, and first ECC portion 2130.

### [1-2. Information Communicated in Monitoring System]

Next, an overview of communication performed by monitoring system 5 configured as above is described with reference to FIG. 7. FIG. 7 is a figure for explaining communication in monitoring system 5 according to Embodiment 1. "Slave" illustrated in FIG. 7 means a device (CMU), such as monitoring circuit 100, on the battery cell 11a (battery) side in monitoring system 5, and "Master" means a higher-layer device (a battery management unit (BMU)), such as management circuit 200, in monitoring system 5. Moreover, FIG. 7 illustrates four monitoring circuits 100. However, the number of monitoring circuits 100 is not limited to four.

As illustrated in FIG. 7, management circuit 200 communicates with first antenna 120 of each monitoring circuit 100 at the frequency of channel A via first antenna 220, and communicates with second antenna 130 of each monitoring circuit 100 at the frequency of channel B via second antenna 230. Although channel A and channel B are different frequencies, they may share a common frequency, for example. Moreover, channel A1 through channel A4 may be different frequencies contained in channel A, or may share a common frequency. Moreover, channel B1 through channel B4 may be different frequencies contained in channel B, or may share a common frequency.

For instance, when secure wireless communication is performed, it is expected to exchange cryptographic keys, such as a public key, through communication. For a low-speed wireless communication system such as BLE, when cryptographic keys are exchanged for enhancement of security functions, communication delay may occur.

In wireless communication devices 110 and 210 according to Embodiment 1, first antennas 120 and 220 (that is, first wireless communication subsystems 111 and 211) can perform first communication, and second antennas 130 and 230 (that is, second wireless communication subsystems 112 and 212) can perform second communication. Thus, transmission and reception of data (for example, measurement data) obtained by monitoring circuit 100 can be performed by one communication, and transmission and reception of cryptographic keys for communication can be performed by the other communication. For instance, while performing the one communication, the other communication can be performed (that is, two communications are performed with a partial time overlap).

The measurement data is an example of first data, and in Embodiment 1, the measurement data includes data regarding a battery monitoring status. The data regarding the battery monitoring status may include, for example, battery sensing data. The first data may be data that demands higher real-time performance than second data, which is described later.

A cryptographic key is an example of the second data of a type different from the type of the first data, and is an example of data to verify the authenticity of the first data. The data to verify the authenticity may include, for example, security related data. Moreover, the security related data may include at least one of a cryptographic key for communication of measurement data, a digital certificate, authentication data, a password hash obtained by hashing a password for communication, the unique ID of a wireless communication circuit, mutual monitoring log data, or mutual monitoring alert data. The mutual monitoring log data may include log data for the transmission and reception of the measurement data. The mutual monitoring alert data may include data regarding an alert detected in the transmission and reception of the measurement data.

It should be noted that instead of or together with data to verify the authenticity of the first data, the second data may include information regarding at least one of an anomaly in a battery or an anomaly within the wireless communication system including wireless communication device 110 or 210.

It should be noted that second wireless communication subsystems 112 and 212 may communicate the security related data while first wireless communication subsystems 111 and 211 communicating the first data.

It should be noted that an example in which first wireless communication subsystems 111 and 211 and second wireless communication subsystems 112 and 212 communicate different data is described above. However, they may communicate the same data. For example, first wireless communication subsystems 111 and 211 and second wireless communication subsystems 112 and 212 may transmit the same data at a different timing or at a different frequency. The same data may be, for example, the same kind of data (for example, the voltage values of a battery obtained at different points in time), or may be completely the same data (for example, the voltage values of a battery obtained at the same point in time).

As described above, each of wireless communication devices 110 and 210 according to Embodiment 1 includes a first wireless communication subsystem including a first wireless communication circuit, a second wireless communication subsystem including a second wireless communication circuit, and a control system that controls the first wireless communication subsystem and the second wireless communication subsystem. Then, the first wireless communication subsystem, the second wireless communication subsystem, the control system are configured as a single semiconductor device.

Thus, each of wireless communication devices 110 and 210 includes the two wireless communication circuits, which are the first wireless communication circuit and the second wireless communication circuit. As such, it is possible to perform more secure wireless communication while suppressing communication delay compared to when the wireless communication device includes just one wireless communication circuit. For instance, by performing data communication using one wireless communication circuit and performing communication to achieve secure wireless communication, using the other wireless communication circuit, it is possible to achieve secure wireless communication while suppressing communication delay, by using the wireless communication device where the first wireless communication subsystem, the second wireless communication subsystem, and the control system are configured as a single semiconductor device. Moreover, for instance, by performing communication of common data using the two wireless communication circuits, it is possible to reduce the number of re-transmissions after a transmission error, which can suppress communication delay due to re-transmission.

Moreover, it is possible to improve security functions by, for example, updating and exchanging cryptographic keys regularly as a measure against cybersecurity risks. Secure wireless communication is important to ensure robust wireless communication quality. Since each of wireless communication devices 110 and 210 can ensure communication quality, it is possible to enhance communication quality.

### [Variations of Embodiment 1]

Hereinafter, variations of Embodiment 1 are described with reference to FIGS. 8 to 10B. It should be noted that the following description focuses on differences from Embodiment 1, and explanations of the same or similar parts as in Embodiment 1 are omitted or simplified.

### [Variation 1 of Embodiment 1]

Hereinafter, monitoring system 5 according to Variation 1 is described with reference to FIGS. 8 and 9. FIGS. 8 and 9 illustrate examples of configurations of first wireless communication circuits according to Variation 1.

As illustrated in FIG. 8, first wireless communication subsystem 111A may include first PHY portion 1110a instead of first PHY portion 1110 of first wireless communication subsystem 111 according to Embodiment 1.

First PHY portion 1110a includes mixer 1119 in addition to first PHY portion 1110, and oscillator 1112 is configured to output a signal (for example, carrier waves) to mixer 1119.

Mixer 1119 is connected between modulator 1111 and power amplifier 1113a, mixes carrier waves from oscillator 1112 with a signal from modulator 1111, and outputs the mixed signal to power amplifier 1113a.

As illustrated in FIG. 9, first PHY portion 1110b of first wireless communication subsystem 111B may include mixer 1116b instead of mixer 1116 of first wireless communication subsystems 111A illustrated in FIG. 8.

Mixer 1116b is configured to output an in-phase (I-phase) baseband signal and a quadrature-phase (Q-phase) baseband signal to IF filter 1117 in response to an input signal. Mixer 1116b may be an I/Q mixer. The I-phase baseband signal is generated (extracted) by mixing the input signal and a signal (local oscillator signal) output by oscillator 1112. The Q-phase baseband signal is generated (extracted) by mixing the input signal and a signal (local oscillator signal) with a 90-degree-shifted phase, output by oscillator 1112.

### [Variation 2 of Embodiment 1]

Hereinafter, monitoring system 5 according to Variation 2 is described with reference to FIGS. 10A and 10B. FIG. 10A illustrates a detailed configuration of monitoring circuit 100A according to Variation 2. FIG. 10B illustrates a detailed configuration of management circuit 200A according to Variation 2.

As illustrated in FIG. 10A, monitoring circuit 100A includes control system 113a instead of control system 113 of monitoring circuit 100 according to Embodiment 1. Control system 113a includes clock control circuit 1390 in addition to control system 113.

Clock control circuit 1390 is a circuit that controls a clock signal used in monitoring circuit 100A. Clock control circuit 1390 supplies a common clock signal to first wireless communication subsystem 111, second wireless communication subsystem 112, and control system 113a, to synchronize the transmission and reception of signals between first wireless communication subsystem 111, second wireless communication subsystem 112, and control system 113a.

As illustrated in FIG. 10B, management circuit 200A includes control system 213a instead of control system 213 of management circuit 200 according to Embodiment 1. Control system 213a includes clock control circuit 2390 in addition to control system 213.

Clock control circuit 2390 is a circuit that controls a clock signal used in management circuit 200A. Clock control circuit 2390 supplies a common clock signal to first wireless communication subsystem 211, second wireless communication subsystem 212, and control system 213a, to synchronize the transmission and reception of signals between first wireless communication subsystem 211, second wireless communication subsystem 212, and control system 213a.

### [Embodiment 2]

For instance, when communication is performed in a space susceptible to multipath fading, a decrease in communication quality, such as extreme attenuation of radio waves at a specific frequency, may occur. Moreover, communication quality may decrease when communication is performed in a space with interfering waves. A wireless communication device is called for that reduces the effects of a decrease in signal-to-interference-plus-noise ratio (SINR) to ensure communication quality. Ensuring communication quality is a basic requirement in secure wireless communication, for example, and is thus important.

Thus, in Embodiment 2, a wireless communication device is described in which two wireless communication circuits each perform data communication using a different frequency to reduce the effects of multipath fading and other effects, thereby enhancing communication quality. For instance, by using such a wireless communication device, the effects of a decrease in SINR are reduced, which can decrease the probability of a communication error occurring due to the attenuation of radio waves, and suppress the occurrence of data re-transmission. Moreover, it is possible to improve resistance to interfering waves and the like by using two frequencies.

The following mainly describes a wireless communication device that performs data communication using two different channels among usable frequency bands (40 channels) when the Bluetooth standard is used.

A monitoring system according to Embodiment 2 is described with reference to FIGS. 11 and 12. It should be noted that the following description focuses on differences from Embodiment 1, and explanations of the same or similar parts as in Embodiment 1 are omitted or simplified. A configuration of the monitoring system according to Embodiment 2 may be similar to that of monitoring system 5 according to Embodiment 1, and explanations thereof are omitted. Moreover, in Embodiment 2, the monitoring system is also denoted by reference sign 5, as in Embodiment 1.

It should be noted that in monitoring system 5 according to Embodiment 2, a first wireless communication subsystem, a second wireless communication subsystem, a control system may be configured as a single-chip semiconductor device, or need not be configured as a single-chip semiconductor device. For instance, at least one of the set of first wireless communication subsystem 111, second wireless communication subsystem 112, and control system 113 or the set of first wireless communication subsystem 211, second wireless communication subsystem 212, and control system 213 need not be configured as a single-chip semiconductor device.

FIG. 11 is a figure for explaining wireless communication frequency bands according to Embodiment 2. FIG. 11 is a mapping diagram of a BLE channel. Specifically, FIG. 11 illustrates 40 frequency bands used in BLE, with the vertical axis denoting signal intensity and the horizontal axis denoting frequency. The mapping diagram illustrated in FIG. 11 is an example of a map held by FH controller 1340 and FH controller 2340, and an example of information indicating frequencies usable in wireless communication.

FH controller 1340 and FH controller 2340 according to Embodiment 2 are processors that perform processing related to a frequency used in communication, select a frequency for communication, and hold information (for example, a map) used for frequency selection. FH controller 1340 and FH controller 2340 may hold the BLE channel mapping diagram illustrated in FIG. 11, for example. It should be noted that the following description uses monitoring circuit 100 as an example.

Ch. A shown in FIG. 11 indicates a frequency band used in radio waves transmitted and received by first antenna 120, and Ch. B indicates a frequency band used in radio waves transmitted and received by second antenna 130. In other words, first wireless communication subsystem 111 communicates using the frequency band (an example of a first frequency) indicated by Ch. A, and second wireless communication subsystem 112 communicates using the frequency band (an example of a second frequency) indicated by Ch. B.

FH controller 1340 controls the first frequency and second frequency, based on the mapping diagram illustrated in FIG. 11. For instance, FH controller 1340 may control the first frequency and the second frequency to be different frequencies (for example, have different frequency bands). For instance, FH controller 1340 may control the first frequency and the second frequency to be different frequencies in each of advertising channels (channels 37, 38, 39) and communication channels (channels 0 through 36). For instance, as illustrated in FIG. 11, regarding the advertising channels, FH controller 1340 controls the first frequency to be channel 37 and the second frequency to be channel 38. For instance, as illustrated in FIG. 11, regarding the communication channels, FH controller 1340 may control the first frequency to be channel 1 and the second frequency to be channel 18.

Thus, by using different frequencies for the first frequency and the second frequency, it is possible to suppress the occurrence of data re-transmission, which enhances communication quality. Moreover, for instance, by using different frequencies for the first frequency and the second frequency in the advertising channels, it is possible to suppress interference with radio waves of another communication standard (for example, Wi-Fi), which improves noise resistance in communication. That is, communication quality is further enhanced.

Moreover, as a non-limiting example, FH controller 1340 controls the frequency of each of first wireless communication subsystem 111 and second wireless communication subsystem 112, based on the BLE channel mapping diagram illustrated in FIG. 11.

FIG. 12 is for a figure for explaining a rule by which to select a wireless communication frequency according to Embodiment 2. "Frequency of LO" illustrated in FIG. 12 is the frequency of an RF signal oscillated by oscillator 1112. Since the frequency of an RF signal is preset, control system 113 can obtain the frequency of the RF signal. In FIG. 12, the vertical axis denotes signal intensity, and the horizontal axis denotes frequency.

When two different frequencies are used as illustrated in FIG. 11, it is predicated that signals with two frequencies will be input into a mixer (for example, mixer 1116). In this case, when differences between the frequency of the RF signal oscillated by oscillator 1112 and the respective frequencies are the same, that is, IF frequencies are the same, communication quality may decrease. Thus, FH controller 1340 controls the first frequency and the second frequency using the rule explained with reference to FIG. 12. It should be noted that in the following description, the frequency of the RF signal is also referred to as a local frequency.

As illustrated in FIG. 12, control system 113 may further control the first frequency and the second frequency to make the value of a difference between the first frequency and a local frequency generated by first wireless communication circuit 111a and second wireless communication circuit 112a differ from the value of a difference between the second frequency and the local frequency. For instance, when the first frequency is set to Ch. A1, if the frequency indicated by "×" is set to the second frequency, the difference between the local frequency and the first frequency matches the difference between the local frequency and the second frequency. Because of this, control system 113 sets, to the second frequency, a frequency (the frequency indicated by Ch. B1) different from the frequency indicated by "×". For instance, control system 113 may set a frequency band indicated by a dashed line in FIG. 12 to the second frequency.

It should be noted that without being limited to controlling the first frequency and the second frequency, based on the mapping diagram illustrated in FIG. 11, FH controller 1340 may control the first frequency and the second frequency without using the mapping diagram. For instance, FH controller 1340 may control the first frequency and the second frequency, based on a table showing preset frequencies used for communication or by using another method.

As described above, each of wireless communication device 110 and 210 according to Embodiment 2 includes a first wireless communication subsystem including a first wireless communication circuit, a second wireless communication subsystem including a second wireless communication circuit, and a control system that controls the first wireless communication subsystem and the second wireless communication subsystem. The first wireless communication subsystem communicates using the first frequency, and the second wireless communication subsystem communicates using the second frequency. Then, the control system controls the first frequency and the second frequency.

Thus, by performing data communication using the two wireless communication circuits, if for instance the first frequency and the second frequency are appropriately set for each other, it is possible to reduce the effects of a decrease in SINR due to multipath fading or interfering waves. Since each of wireless communication devices 110 and 210 can ensure communication quality, it is possible to enhance communication quality.

### [Embodiment 3]

When an error occurs during the communication under the existing BLE standard, the error is detected, and re-transmission is requested. However, frequent re-transmissions may cause communication delay. Moreover, for instance, when only a payload portion is error-corrected, re-transmission may occur. Meanwhile, in wireless communication, it is desirable to resolve communication delay. Resolving communication delay is important in, for example, secure wireless communication. Moreover, a communication delay resolving method is important in terms of, for example, ensuring robust wireless communication quality.

In view of this, in Embodiment 3, a wireless communication device is described that is capable of enhancing communication quality by performing error correction on portions other than the payload portion conforming to the normal BLE standard and suppressing occurrence of re-transmission. For instance, by performing error correction on the entire packet, it is possible to decrease the number of re-transmissions while conforming to the existing BLE standard.

Hereinafter, a monitoring system according to Embodiment 3 is described with reference to FIGS. 13 to 17. It should be noted that the following description focuses on differences from Embodiment 1, and explanations of the same or similar parts as in Embodiment 1 are omitted or simplified. A configuration of the monitoring system according to Embodiment 3 may be similar to that of monitoring system 5 according to Embodiment 1, and explanations thereof are omitted. Moreover, in Embodiment 3, the monitoring system is also denoted by reference sign 5, as in Embodiment 1.

It should be noted that in monitoring system 5 according to Embodiment 3, a first wireless communication subsystem, a second wireless communication subsystem, and a control system may or may not be configured as a single-chip semiconductor device. For instance, at least one of the set of first wireless communication subsystem 111, second wireless communication subsystem 112, and control system 113 or the set of first wireless communication subsystem 211, second wireless communication subsystem 212, and control system 213 need not be configured as a single-chip semiconductor device. Moreover, the frequency used in the first wireless communication subsystem and that used in the second wireless communication subsystem may be the same or different.

FIG. 13 is a flowchart illustrating operation (a wireless communication method, a monitoring method) of monitoring system 5 according to Embodiment 3 during transmission. In FIG. 13, a case where first wireless communication circuit 111a transmits data to management circuit 200 (first wireless communication circuit 211a) is described. However, the same applies when first wireless communication circuit 211a transmits data to first wireless communication circuit 111a, and when one of second wireless communication circuit 112a or second wireless communication circuit 212a transmits to the other.

As illustrated in FIG. 13, first host circuit 111b transmits transmission data to first MAC portion 1120 (S10). Output circuit 1122 of first MAC portion 1120 obtains the transmission data via communication circuit 1121, and generates a packet based on the obtained transmission data.

Next, first MAC portion 1120 transmits the generated packet to packet encoder 1131 and packet length encoder 1132 (S20). Output circuit 1122 transmits the generated packet to packet encoder 1131 and packet length encoder 1132. The packet transmitted to packet encoder 1131 and the packet transmitted to packet length encoder 1132 are the same packet.

FIG. 14A illustrates a packet configuration of a packet transmitted to an ECC portion (here, first ECC portion 1130) according to Embodiment 3. FIG. 14A illustrates an overview of the packet configuration.

A specific, invariant bit sequence specified by a communication standard or the like is stored in a preamble.

Information for controlling a data destination, a transmission path, and the like, and other information are stored in a PHY header.

A PHY payload is the main body of data included in a packet.

The MAC addresses of a destination and a source, and other information are stored in a MAC header.

A MAC payload is a payload portion defined by a protocol. The MAC payload is data obtained by removing additional information, such as a header included in the packet, from the PHY payload. In Embodiment 3, for example, data obtained by sensing battery cell 11a and other data are stored in the MAC payload.

A cyclic redundancy check (CRC) value used for detecting a communication error is stored in a CRC field.

The description now returns to FIG. 13. Packet length encoder 1132 encodes a packet length, and transmits the packet length ("Data length" illustrated in FIG. 14B, which is described later) and packet length check bits (including one or more bits) ("Data length ECC check bit" illustrated in FIG. 14B, which is described later) to transmission packet generation circuit 1133 (S30). The packet length is, for example, the length of a packet including a MAC payload (specifically, send data). For instance, data obtained by sensing battery cell 11a and other data are stored in the send data.

Moreover, packet encoder 1131 encodes the packet, and transmits the packet and packet check bits ("ECC check bit" illustrated in FIG. 14B, which is described later) to transmission packet generation circuit 1133 (S40). The packet check bits are, for example, check bits for the entire packet including the PHY header and PHY payload. It should be noted that the packet check bits may be, for example, check bits for the entire packet further including a preamble.

Since first ECC portion 1130 is connected between first PHY portion 1110 and first MAC portion 1120, it is possible to generate check bits capable of error correction for the entire packet.

It should be noted that the processing order of steps S30 and S40 is not particularly limited. Steps S30 and S40 may be performed in parallel, or step S30 may be performed after step S40.

Then, transmission packet generation circuit 1133 transmits, as a transmission packet (second transmission packet), a packet in which the packet length, the packet length check bits, and the packet check bits are inserted into the data payload of the packet (for FIG. 14A, into the MAC payload) to first PHY portion 1110 (S50).

FIG. 14B illustrates an example of a packet configuration during transmission according to Embodiment 3. FIG. 14B illustrates a packet configuration of a transmission packet generated by transmission packet generation circuit 1133.

As illustrated in FIG. 14B, transmission packet generation circuit 1133 generates a transmission packet by inserting a packet length (data length), a packet length check bit (data length ECC check bit) for the packet length, and a packet check bit (ECC check bit) for the packet into the MAC payload of the packet illustrated in FIG. 14A.

It should be noted that in FIG. 14B, the packet length check bit and the packet check bit are inserted into the MAC payload due to the constraints of the BLE communication standard. However, without such constraints, the packet length check bit and the packet check bit may be inserted into a different portion.

It should be noted that without being limited to inserting both the packet length check bit and the packet check bit into the MAC payload, transmission packet generation circuit 1133 may insert at least one of the packet length check bit or the packet check bit into the MAC payload. FIG. 14C illustrates another example of the packet configuration during transmission according to Embodiment 3.

As illustrated in FIG. 14C, transmission packet generation circuit 1133 may insert only the packet check bit out of the packet length check bit and the packet check bit into the MAC payload. For instance, when data length is not corrected, a transmission packet (second transmission packet) as illustrated in FIG. 14C may be generated. It should be noted that the data length mentioned here is a bit sequence indicating the length of data included in a packet, and means "Data length" illustrated in FIG. 14B. The same applies below.

The description now returns to FIG. 13. Then, first PHY portion 1110 performs processing such as modulation on the packet received from transmission packet generation circuit 1133, and transmits the packet via first antenna 120 (S60). This makes it possible to detect an error in each of the packet and the packet length, and transmit a correctable packet to management circuit 200.

FIG. 14D illustrates an example of a packet configuration during processing according to Embodiment 3. FIG. 14D illustrates a packet configuration when a device that received a transmission packet (here, management circuit 200) performs processing for the transmission packet.

As illustrated in FIG. 14D, management circuit 200 moves the position of the packet check bit in the transmission packet illustrated in FIG. 14C to the end of the transmission packet, and then performs the processing.

It should be noted that, for instance, the processing from steps S10 through S60 may be performed in parallel with or at a different timing from processing for transmitting a cryptographic key or the like in second wireless communication circuit 112a.

Here, a specific example of the packet configuration is described with reference to FIGS. 15A to 16B.

FIGS. 15A and 15B illustrate a packet frame when packet length check bits and packet check bits are applied to (inserted into) a BLE packet. For instance, FIG. 15A illustrates an example of a packet configuration according to Embodiment 3, when these are applied to a BLE packet. For instance, FIG. 15B illustrates an example of a payload configuration in a packet according to Embodiment 3, when these are applied to a BLE packet. FIG. 15B is an enlarged illustration of the data payload illustrated in FIG. 15A, and schematically illustrates procedure of correction processing.

As illustrated in FIGS. 15A and 15B, transmission packet generation circuit 1133 may generate a transmission packet for BLE, by inserting a packet length (data length), packet length check bits (length BCH), and packet check bits (BCH) into a data payload. The packet length is the data length of the data payload, and the packet check bits are check bits for the entire protocol data unit (PDU).

As illustrated in 15B, by the data length being error-corrected using the packet length check bits, it is possible to more accurately identify the position of the packet check bits in the packet. Because of the packet check bits, it is more accurately perform error correction on the entire packet including send data. To error-correct the data length using the packet length check bits means to correct a bit sequence stored in "Data length" illustrated in FIG. 15B to the correct bit sequence by using the packet length check bits. The same applies below.

It should be noted that the numerical values (the number of bits or bytes) illustrated in FIG. 15A are examples. Moreover, as a non-limiting example, the packet length check bits have a smaller data size than the packet check bits.

As an example other than the BLE packet, FIGS. 16A and 16B illustrate a packet frame when packet length check bits and packet check bits are applied to (inserted into) an IEEE 802.15.4 packet. For instance, FIG. 16A illustrates an example of a packet configuration during communication according to Embodiment 3, when these are applied to an IEEE 802.15.4 packet. FIG. 16B illustrates an example of a packet configuration during processing according to Embodiment 3, when these are applied to an IEEE 802.15.4 packet.

As illustrated in FIG. 16A, transmission packet generation circuit 1133 may generate a transmission packet (second transmission packet) for IEEE 802.15.4, by inserting a packet length, packet length check bits (ECC check bits for packet length), and packet check bits (ECC check bits) into a frame payload.

As illustrated in FIG. 16B, management circuit 200, which has received the transmission packet illustrated in FIG. 16A, moves the position of the packet check bits in the transmission packet to the end of the transmission packet, and then performs processing.

It should be noted that the numerical values (the number of bytes) illustrated in FIGS. 16A and 16B are examples. Moreover, as a non-limiting example, the packet length check bits have a smaller data size than the packet check bits.

Then, processing performed by the device that received the transmission packet illustrated in FIG. 14B is described with reference to FIG. 17. FIG. 17 is a flowchart illustrating operation (a wireless communication method, a monitoring method) of monitoring system 5 according to Embodiment 3 during reception. In FIG. 17, a case where first wireless communication circuit 211a of management circuit 200 receives a transmission packet from monitoring circuit 100 (for example, first wireless communication circuit 111a) is described. The same applies to when first wireless communication circuit 111a receives data from first wireless communication circuit 211a and when one of second wireless communication circuit 112a or second wireless communication circuit 212a receives data from the other.

As illustrated in FIG. 17, first PHY portion 2110 of first wireless communication circuit 211a performs processing such as demodulation on a signal received via first antenna 220, and transmits baseband data (a baseband signal) to a packet length correction circuit and a packet correction circuit of first ECC portion 2130 (S110).

Then, the packet length correction circuit reads the packet length and the packet length check bits within the payload from the baseband data, performs error check on the packet length by using the packet length check bits (S120), and determines whether there is an error in the packet length of the transmission packet (S130).

When the packet length correction circuit determines that there is an error in the packet length (Y in S130), the packet length correction circuit performs error correction on the packet length by using the packet length check bits, and transmits the error-corrected packet length to the packet correction circuit

(S140). Moreover, when the packet length correction circuit determines that there is no error in the packet length (N in S130), the packet length correction circuit transmits the packet length included in the packet to the packet correction circuit (S150). In step S150, error correction using the packet length check bits is not performed on the packet length.

Then, the packet correction circuit identifies the position of the packet check bits within the data payload from the baseband data by using the packet length from the packet length correction circuit, and performs error check on the received packet by using the identified check bits (S160), and determines whether there is an error in the packet (S170).

When the packet correction circuit determines that there is an error in the packet (Y in S170), the packet correction circuit performs error correction on the packet by using the packet check bits, and transmits the error-corrected packet to first MAC portion 2120 (S180). A packet error correction method using packet check bits is not particularly limited, and any known method may be used. Moreover, when the packet correction circuit determines that there is no error in the packet (N in S170), the packet correction circuit transmits the packet to first MAC portion 2120 (S190). In step S190, error correction using the packet check bits is not performed on the packet.

Then, first MAC portion 2120 processes the payload header, and transmits data to first host circuit 211b (S200).

Then, first host circuit 211b performs processing based on the received data (S210).

It should be noted that, for instance, the processing from steps S110 through S210 may be performed in parallel with or at a different timing from processing for receiving a cryptographic key or the like via second wireless communication circuit 212a (for example, the processing from steps 110 through S210 corresponding to reception of a cryptographic key).

In this manner, after correcting the data length using the packet length check bits, first ECC portion 2130 performs error detection and correction using the packet check bits to verify that there is no error in the entire packet.

For instance, although it is possible to perform error detection and correction using the packet check bits to verify that there is no error in the entire packet (header + payload), if there is an error in the data length, it may not be possible to correct the error using the packet check bits. Thus, in Embodiment 3, first ECC portion 2130 corrects the entire packet after correcting the data length for communication.

As described above, each of wireless communication devices 110 and 210 according to Embodiment 3 includes a MAC portion having the functions of a media link layer, a PHY portion having the functions of a physical layer, and an ECC portion that performs error-correction related processing on a passing signal, and the ECC portion is connected between the MAC portion and the PHY portion.

Because of the arrangement where the ECC portion is disposed between the PHY portion and the MAC portion, it is possible to perform error correction on the entire packet, which can suppress re-transmission of a packet compared to the arrangement where the ECC portion is not disposed between the PHY portion and the MAC portion. Since it is possible to resolve communication delay attributed to re-transmission, communication quality is enhanced.

### [Variation of Embodiment 3]

Hereinafter, a variation of Embodiment 3 is described with reference to FIG. 18. It should be noted that the following description focuses on differences from Embodiment 3, and explanations of the same or similar parts as in Embodiment 3 are omitted or simplified. FIG. 18 is a figure for explaining communication in monitoring system 3005 according to a variation of Embodiment 3.

As illustrated in FIG. 18, monitoring system 3005 includes communicator 3110, antenna 3120, and sensing part 3140 that together constitute a monitoring circuit, and communicator 3210, antenna 3220, and processor 3240 that together constitute a management circuit.

In the variation, each of the monitoring circuit and the management circuit includes a pair of a wireless communication subsystem and an antenna. Specifically, the wireless communication device of the monitoring circuit has, for example, a configuration corresponding to that illustrated in FIG. 3A, but without second wireless communication subsystem 112. The wireless communication device according to the variation includes, for example, first wireless communication subsystem 111 and control system 113.

Sensing part 3140 includes a device that senses a target object, and corresponds to battery monitoring IC 140 according to Embodiment 1, for example.

The wireless communication device of the management circuit has, for example, a configuration corresponding to that illustrated in FIG. 6A, but without second wireless communication subsystem 212. The wireless communication device according to the variation includes, for example, first wireless communication subsystem 211 and control system 213.

Processor 3240 processes data from the monitoring circuit. Processor 3240 corresponds to MCU 240 according to Embodiment 1, for example.

As such, even in the configuration where the wireless communication device includes just one wireless communication subsystem, when transmitted and received packets include a packet length and packet length check bits, if an error occurs in the packet, it is possible to increase the probability of being able to perform error correction. Thus, as with Embodiment 3, it is possible to suppress occurrence of communication delay due to packet re-transmission.

### (Application Examples of Monitoring System)

Next, application examples of monitoring system 5 are described with reference to FIG. 19 to 21. FIG. 19 to 21 illustrate application examples of monitoring system 5 or 3005 (monitoring system 5 or the like) according to the present disclosure. The communicators illustrated in FIG. 19 to 21 correspond to the wireless communication devices (for example, wireless communication device 110 or 210) in Embodiments 1 to 3 and variations of Embodiments 1 and 3. It should be noted that in the figures, just one antenna is illustrated for one communicator for convenience. However, one communicator may include two antennas.

As illustrated in FIG. 19, electric vehicle 1a according to the present disclosure includes communicators 110a, first antennas 120a, and processors 140a. Each communicator 110a of electric vehicle 1a may further include a second antenna (not illustrated).

Communicator 110a performs wireless communication between processor 140a and another processor (for example, a processor of a device external to electric vehicle 1a) or a host (host circuit). For instance, communicator 110a has a configuration similar to that of wireless communication device 110 or 210.

Processor 140a performs processing on data obtained by a sensor or communicator 110a. Moreover, processor 140a performs data communication via communicator 110a. Processor 140a corresponds to battery monitoring IC 140 described above, for example.

In this case, for instance, communicator 110a may incorporate packet length check bits and packet check bits into a transmission packet in which to transmit data generated by processor 140a. If communicator 110a includes two antennas, communicator 110a may communicate at different frequencies using the two antennas.

Monitoring system 5 or the like may include communicator 110a illustrated in FIG. 19. For instance, monitoring system 5 or the like may be embodied as a sensing system that performs sensing related to electric vehicle 1a. For instance, processor 140a is a monitoring circuit that monitors the air pressure of tires of electric vehicle 1a, and monitoring system 5 or the like may be embodied as a tire air pressure monitoring system for monitoring tire air pressure. A tire is an example of a target object to be monitored by processor 140a. It should be noted that monitoring system 5 or the like is not limited to electric vehicle 1a and may also be used in a gasoline vehicle and other types of vehicles.

As illustrated in FIG. 20, electric vehicle 1b according to the present disclosure includes communicator 110b, first antenna 120b, BMS 140b, and secondary battery 11b.

Communicator 110b performs wireless communication between BMS 140b and another processor (for example, cloud server 510). For instance, communicator 110b has a configuration similar to that of wireless communication device 110 or 210.

BMS 140b manages the battery according to the voltage and current of the battery, and so forth. BMS 140b may include a BMU. BMS 140b corresponds to battery monitoring IC 140 described above, for example.

Secondary battery 11b is the drive battery (battery cell) of electric vehicle 1b.

In this case, for instance, communicator 110b may incorporate packet length check bits and packet check bits into a transmission packet in which to transmit data generated by BMS 140b to cloud server 510. If communicator 110b includes two antennas, communicator 110b may communicate at different frequencies using the two antennas. Moreover, in this case, the control system of communicator 110b may be connected to a battery monitoring IC connected to the battery or a battery management unit (BMU), and transmit the monitoring status of the battery via wireless communication using at least one of the first wireless communication circuit or the second wireless communication circuit.

Moreover, cloud server 510 may include, for example, wireless communication device 110 or 210 as a wireless communication device.

Monitoring system 5 or the like may include communicator 110b illustrated in FIG. 20. For instance, monitoring system 5 may be embodied as a sensing system that transmits information regarding monitoring of secondary battery 11b of electric vehicle 1b.

It should be noted that cloud network system 500 including cloud server 510 may be included in a distributed ledger system that manages a distributed ledger, such as a blockchain.

As illustrated in FIG. 21, electric vehicle 1a according to the present disclosure performs wireless communication with a relay device that relays communication between electric vehicle 1a and cloud server 510 as another processor.

The relay device includes communicator 610, antenna 620, and processor 640.

Communicator 610 may have a configuration similar to that of wireless communication device 110 or 210.

Processor 640 communicates with communicator 110a via antenna 620 and communicator 610.

Monitoring system 5 or the like may include at least one of communicator 110a or 610 illustrated in FIG. 21.

### [Other Embodiments]

The monitoring system and so forth according to one or more aspects are described above based on, for example, Embodiments 1 to 3, the variations of Embodiment 1, and the variation of Embodiment 3 (the embodiments and so forth). However, the present disclosure is not limited to the embodiments and so forth. The present disclosure may include embodiments obtained by adding various changes envisioned by those skilled in the art to the embodiments and embodiments created by combining elements described in different embodiments as long as the resultant embodiments do not depart from the scope of the present disclosure.

For instance, in Embodiments 1 to 3 and the variations in Embodiment 1, examples where the wireless communication device includes two sets of wireless communication subsystems and antennas are described. However, the wireless communication device may include three or more sets of wireless communication subsystems and antennas.

Moreover, for instance, in the wireless communication device according to Embodiment 2, the first wireless communication subsystem, the second wireless communication subsystem, and the control system may not be configured as a single chip, and data to verify authenticity may be transmittable. Such a wireless communication device may include, for example, a first wireless communication subsystem including a first wireless communication circuit, a second wireless communication subsystem including a second wireless communication circuit, and a control system that controls the first wireless communication subsystem and the second wireless communication subsystem. Data communicated by one of the first wireless communication subsystem or the second wireless communication subsystem may include data to verify the authenticity of data communicated by the other of the first wireless communication subsystem or the second wireless communication subsystem.

Moreover, for instance, at least one of the information illustrated in FIG. 11 or the information illustrated in FIG. 12 according to Embodiment 2 described above may be stored in memory of a control system (for example, each of control system 113 and 213) as information regarding communication settings.

Moreover, the monitoring systems or the wireless communication devices described in the embodiments and so forth may be used in any devices that perform wireless communication. For instance, the monitoring systems or the wireless communication devices may be used in, for example, flying vehicles, such as a drone (an example of a mobile object), and home appliances.

Moreover, in the embodiments and so forth, each element may be embodied as dedicated hardware or may be embodied by executing a software program suitable for the element. Each element may be embodied by a program executer, such as a CPU or a processor, reading out and executing the software program stored in a recording medium, such as a hardware disk or semiconductor memory.

Moreover, the order in which steps in a flowchart are performed is provided for specifically explaining the present disclosure, and the steps may be performed in a different order. Moreover, some of the steps may be performed with other steps simultaneously (in parallel), and some of the steps need not be performed.

Moreover, the division of functional blocks in a block diagram is merely an example. A plurality of functional blocks may be formed as a single functional block, a single functional block may be divided into a plurality of functional blocks, or some functions may be transferred to other functional blocks. Moreover, the functions of a plurality of functional blocks having similar functions may be processed in parallel or in a time-sharing manner by a single piece of hardware or software.

Moreover, each of the monitoring circuit and the management circuit according to the above embodiments and so forth may be embodied as a single device or as a plurality of devices. When at least one of the monitoring circuit or the management circuit is embodied as a plurality of devices, each element included in the at least one circuit may be allocated to the plurality of devices in any manner. When the at least one circuit is embodied as a plurality of devices, the communication method between the plurality of devices is not particularly limited and may be wireless communication or wired communication. Moreover, wireless communication and wired communication may be combined as communication between devices.

Moreover, each element described in the above embodiments and so forth may be embodied as software, or may be typically embodied as an LSI, which is an integrated circuit. These may be individually implemented as a single chip, or may be implemented as a single chip including some or all of them. Here, it is referred to as an LSI, but it may also be referred to as an IC, system LSI, super LSI, or ultra LSI depending on the degree of integration. Moreover, the method of integrated circuit implementation is not limited to an LSI, and may be embodied as a dedicated circuit (a general-purpose circuit that executes a dedicated program) or a general-purpose processor. A field programmable gate array (FPGA) that can be programmed after LSI manufacturing, or a reconfigurable processor that can reconfigure the connection or settings of circuit cells inside the LSI may also be used. Furthermore, if a technology for integrated circuit implementation emerges that replaces an LSI due to advancements in semiconductor technology or derivative technologies, it is natural to integrate the elements using the technology.

A system LSI is an ultra-multifunctional LSI manufactured by integrating a plurality of processors on a single chip. Specifically, a system LSI is a computer system configured to include a microprocessor, read only memory (ROM), random access memory (RAM), and so forth. A computer program is stored in the ROM. The system LSI achieves its function by the microprocessor operating according to the computer program.

Moreover, one aspect of the present disclosure may be a computer program for causing a computer to perform characteristic steps included in the wireless communication method illustrated in FIG. 13 or 17.

Moreover, for example, the program may be a program for causing a computer to execute. Moreover, one aspect of the present disclosure may be a computer-readable non-transitory recording medium having recorded thereon such a program. For example, such a program may be recorded on a recording medium and distributed. For example, by installing a distributed program on a device including another processor and causing the processor to execute the program, it is possible to cause the device to perform each of the processes described above.

### (Supplementary Notes)

The following techniques are disclosed by the statements in the above embodiments and so forth.

(Technique 1) A wireless communication device includes: a first wireless communication subsystem including a first wireless communication circuit; a second wireless communication subsystem including a second wireless communication circuit; and a control system that controls the first wireless communication subsystem and the second wireless communication subsystem, in which the first wireless communication subsystem communicates using a first frequency, the second wireless communication subsystem communicates using a second frequency, and the control system controls the first frequency and the second frequency.

Since data communication is performed using the two wireless communication circuits, when for instance the first frequency and the second frequency are set appropriately in relation to each other, it is possible to reduce the effects of SNIR degradation due to multipath fading or interfering waves. Thus, it is possible to enhance communication quality.

(Technique 2) In the wireless communication device according to Technique 1, the control system controls the first frequency and the second frequency based on information indicating frequencies usable for wireless communication.

Since it is possible to control the first frequency and the second frequency out of the frequencies, an appropriate frequency is selected, which may enhance communication quality.

(Technique 3) In the wireless communication device according to Technique 2, the first frequency and the second frequency are different frequencies.

Since different frequencies are used, even in a space susceptible to, for example, multipath fading, it is possible to communicate data more reliably.

(Technique 4) In the wireless communication device according to Technique 3, the control system controls the first frequency and the second frequency to make a difference between a local frequency and the first frequency differ from a difference between the local frequency and the second frequency, the local frequency being generated by the first wireless communication circuit and the second wireless communication circuit.

Thus, it is possible to suppress IF frequencies corresponding to two frequencies used in the wireless communication device from becoming the same.

(Technique 5) In the wireless communication device according to any one of Techniques 1 to 4, the control system is connected to a battery monitoring ring integrated circuit (IC) connected to a battery or a battery management unit, and transmits a monitoring status of the battery using at least one of the first wireless communication circuit or the second wireless communication circuit via wireless communication.

Thus, it is possible to enhance communication quality in battery management.

(Technique 6) In the wireless communication device according to any one of Techniques 1 to 5, the first wireless communication subsystem includes: a first physical layer (PHY) portion having a function of a physical layer; a first medium access control (MAC) portion connected to the first PHY portion and having a function of a media link layer, the first MAC portion being connected to the control system via a first bus; and a first error correction circuit (ECC) portion that is connected to each of the first PHY portion and the first MAC portion, and performs error-correction related processing on a passing signal, and the second wireless communication subsystem includes: a second PHY portion having a function of a physical layer; a second MAC portion connected to the second PHY portion and having a function of a media link layer, the second MAC portion being connected to the control system via a second bus; and a second ECC portion that is connected to each of the second PHY portion and the second MAC portion, and performs error-correction related processing on a passing signal.

Because of the arrangement where the ECC portion is disposed between the PHY portion and the MAC portion, it is possible to perform error correction on the entire packet. Thus, communication quality is enhanced compared to the arrangement where the ECC portion is not disposed between the PHY portion and the MAC portion.

(Technique 7) In the wireless communication device according to Technique 6, the control system includes a third bus connected to each of the first bus and the second bus.

Thus, the communication system can control communication in the first wireless communication subsystem and the second wireless communication subsystem via the third bus.

(Technique 8) In the wireless communication device according to any one of Techniques 1 to 7, the first wireless communication subsystem, the second wireless communication subsystem, and the control system are configured as a single semiconductor device.

Thus, it is possible to enhance communication quality using the single semiconductor device.

(Technique 9) A monitoring system includes: a monitoring circuit that monitors a target object; and the wireless communication device according to any one of Techniques 1 to 8 that wirelessly communicates data obtained by the monitoring circuit.

Thus, the monitoring system has effects similar to those of the above wireless communication device.

(Technique 10) In the monitoring system according to Technique 9, the target object includes an assembled battery including one or more battery cells provided to a vehicle, and the monitoring circuit monitors the one or more battery cells.

Thus, it is possible to enhance communication quality in battery management.

### [Industrial Applicability]

The present disclosure is useful in a monitoring system such as a battery management system provided in a vehicle.

### [Reference Signs List]

1 vehicle
1a, 1b electric vehicle
2 seat
3 chassis
4 junction box
5, 3005 monitoring system
11 battery module
11a battery cell
11b secondary battery
100, 100A monitoring circuit
110, 210 wireless communication device
110a, 110b, 610, 3110, 3210 communicator
111, 111A, 111B, 211 first wireless communication subsystem
111a, 211a first wireless communication circuit
111b, 211b first host circuit
111c power management unit
112, 212 second wireless communication subsystem
112a, 212a second wireless communication circuit
112b, 212b second host circuit
113, 113a, 213, 213a control system
120, 120a, 120b, 220 first antenna
130, 230 second antenna
140 battery monitoring IC
140a, 640, 3240 processor
140b BMS
150, 1115 switch
200, 200A management circuit
240 MCU
500 cloud network system
510 cloud server
620, 3120, 3220 antenna
1110, 1110a, 1110b, 2110 first PHY portion
1111 modulator
1112 oscillator
1113a power amplifier
1113b linear amplifier
1114a, 1114b filter
1116, 1116b, 1119 mixer
1117 IF filter
1118 demodulator
1120, 2120 first MAC portion
1121, 1370, 2370 communication circuit
1122 output circuit
1123, 1150, 1250, 1320, 2150, 2250, 2320 memory
1130, 2130 first ECC portion
1131 packet encoder
1132 packet length encoder
1133 transmission packet generation circuit
1134 packet length correction circuit
1135 packet correction circuit
1140, 1240, 1310, 2140, 2240, 2310 MCU core
1160, 1260, 1330, 2160, 2260, 2330 security module
1161 first encryption circuit
1162 second encryption circuit
1163 third encryption circuit
1164 calculation circuit
1165 random number generator
1166 controller
1167 interface
1170, 1270, 1340, 2170, 2270, 2340 FH controller
1180, 1280, 2180, 2280 peripheral circuitry
1190, 2190 first bus
1210, 2210 second PHY portion
1220, 2220 second MAC portion
1230, 2230 second ECC portion
1290, 2290 second bus
1350, 2350 first peripheral circuitry
1360, 2360 second peripheral circuitry
1380, 2380 third bus
1390, 2390 clock control circuit
3140 sensing part
L transmission channel

## Claims

1. A wireless communication device comprising:
a first wireless communication subsystem including a first wireless communication circuit;
a second wireless communication subsystem including a second wireless communication circuit; and
a control system that controls the first wireless communication subsystem and the second wireless communication subsystem, wherein
the first wireless communication subsystem communicates using a first frequency,
the second wireless communication subsystem communicates using a second frequency, and
the control system controls the first frequency and the second frequency.

2. The wireless communication device according to claim 1, wherein
the control system controls the first frequency and the second frequency based on information indicating frequencies usable for wireless communication.

3. The wireless communication device according to claim 2, wherein
the first frequency and the second frequency are different frequencies.

4. The wireless communication device according to claim 3, wherein
the control system controls the first frequency and the second frequency to make a difference between a local frequency and the first frequency differ from a difference between the local frequency and the second frequency, the local frequency being generated by the first wireless communication circuit and the second wireless communication circuit.

5. The wireless communication device according to any one of claims 1 to 4, wherein
the control system is connected to a battery monitoring ring integrated circuit (IC) connected to a battery or a battery management unit, and transmits a monitoring status of the battery using at least one of the first wireless communication circuit or the second wireless communication circuit via wireless communication.

6. The wireless communication device according to any one of claims 1 to 5, wherein
the first wireless communication subsystem includes:
a first physical layer (PHY) portion having a function of a physical layer;
a first medium access control (MAC) portion connected to the first PHY portion and having a function of a media link layer, the first MAC portion being connected to the control system via a first bus; and
a first error correction circuit (ECC) portion that is connected to each of the first PHY portion and the first MAC portion, and performs error-correction related processing on a passing signal, and
the second wireless communication subsystem includes:
a second PHY portion having a function of a physical layer;
a second MAC portion connected to the second PHY portion and having a function of a media link layer, the second MAC portion being connected to the control system via a second bus; and
a second ECC portion that is connected to each of the second PHY portion and the second MAC portion, and performs error-correction related processing on a passing signal.

7. The wireless communication device according to claim 6, wherein
the control system includes a third bus connected to each of the first bus and the second bus.

8. The wireless communication device according to any one of claims 1 to 7, wherein
the first wireless communication subsystem, the second wireless communication subsystem, and the control system are configured as a single semiconductor device.

9. A monitoring system comprising:
a monitoring circuit that monitors a target object; and
the wireless communication device according to any one of claims 1 to 8 that wirelessly communicates data obtained by the monitoring circuit.

10. The monitoring system according to claim 9, wherein
the target object includes an assembled battery including one or more battery cells provided to a vehicle, and
the monitoring circuit monitors the one or more battery cells.
